# EUROPEAN PATENT SPECIFICATION

(11) **EP 4 402 610 B1**
(45) Date of publication and mention of the grant of the patent: **06.08.2025**
(21) Application number: 22773771.5
(22) Date of filing: 15.09.2022
(51) Int. Cl.: G06N 3/045, G06N 3/042, G06N 3/0455, G06N 3/088, G06N 3/096, G06F 21/55, G06N 3/0442

(54) **SYSTEM AND METHOD FOR TRAINING AN AUTOENCODER TO DETECT ANOMALOUS SYSTEM BEHAVIOUR**
SYSTEM UND VERFAHREN ZUM TRAINIEREN EINES AUTOCODIERERS ZUR ERKENNUNG VON ANOMALEM SYSTEMVERHALTEN
SYSTÈME ET PROCÉDÉ PERMETTANT D'ENTRAÎNER UN AUTO-ENCODEUR POUR DÉTECTER UN COMPORTEMENT ANORMAL D'UN SYSTÈME

(30) Priority: 15.09.2021 GB 202113180; 15.09.2021 EP 21275130
(43) Date of publication of application: 24.07.2024
(73) Proprietor: BAE SYSTEMS plc, London SW1Y 5AD (GB)
(72) Inventor: HORRY, Samuel, Portsmouth, Hampshire PO1 3NB (GB); NICKLIN, Richard Edward John, Portsmouth, Hampshire PO1 3NB (GB); MAI, Hans-Heinrich, Portsmouth, Hampshire PO1 3NB (GB)
(74) Representative: BAE SYSTEMS plc Group IP Department
(86) International application number: PCT/GB2022/052326
(87) International publication number: WO 2023/041907

(56) References cited:
- ARELLANO-ESPITIA FRANCISCO ET AL: "Deep-Compact-Clustering Based Anomaly Detection Applied to Electromechanical Industrial Systems", vol. 21, no. 17, 30 August 2021 (2021-08-30), pages 1 - 25, XP055902153, Retrieved from the Internet <URL:https://upcommons.upc.edu/bitstream/handle/2117/358140/Deep-Compact-Clustering%20Based%20Anomaly%20Detection%20Applied%20to%20Electromechanical%20Industrial%20Systems.pdf;jsessionid=72D97ADE1A990F0979D7A76E671D212F?sequence=1> [retrieved on 20220316], DOI: 10.3390/s21175830
- VIDYASAGAR SADHU ET AL: "Deep Multi-Task Learning for Anomalous Driving Detection Using CAN Bus Scalar Sensor Data", ARXIV.ORG, CORNELL UNIVERSITY LIBRARY, 201 OLIN LIBRARY CORNELL UNIVERSITY ITHACA, NY 14853, 28 June 2019 (2019-06-28), XP081386849

## Description

### TECHNICAL FIELD

The present invention relates generally to a system and method for training an autoencoder to detect anomalous system behaviour, for example in complex engineering assets including those found in maritime vessels and for using the trained autoencoder.

### BACKGROUND

Prognostics and Health Management (PHM) is an active and well subscribed to field of study. Companies managing complex distributed or safety critical engineering assets want to understand the status of their portfolio in order to maximise efficiency and minimise downtime. Approaches such as health scores, anomaly detection, failure prediction and remaining useful life calculation are applied across various domains in order to advise maintenance and repair schedules.

The published literature in this field will typically use synthetic data or carefully collected lab-based data to demonstrate the proficiency of a technique, however the use of "real-world" applications is less common. The challenges of developing PHM algorithms to run in a real-world environment are discussed and postulated, but tangible examples are not widespread. For example, see as a reference "Prognostics and Health Management for Maintenance Practitioners-Review, Implementation and Tools Evaluation" by Atamuradov et al. published in International Journal of Prognostics and Health Management in 2017.

Most known PHM applications apply to engineered systems operating in and on a well-defined single-state and without the consideration for prior usage and age. Especially but not exclusively in the maritime domain, systems' operating envelops are manifold by design and operation environment. They are also designed to be in operation for sustained long-term periods of time in excess of ten years. Moreover, they are embedded into a wider set of systems that potentially interacts with them. Any empirical data captured is exposed to such confounding variables and to biases resulting from differently sized samples of each possible operating envelope. Current inventions hardly allow for the incorporation of these factors and thus experience unacceptable false results once integrated into a "real-world" setting.

As only a continued data-driven approach can come close to capturing these intricacies that are otherwise rarely established in a deterministic manner, further data irregularities arise during the gathering phase. These biases can be collectively referred to as "system drift" that arise from changes over time. Firstly, software and hardware collecting the data undergo changes and can influence the underlying distributions. Secondly, the systems undergo physical changes while in operation mainly due to a variety of maintenance activities or unforeseen events. The latter is another main factor of distortion as most maintenance activities are done without being meaningfully captured in appropriate reference data. This results in potentially unlabelled data sets that can hardly be labelled ex-post. Moreover, complex engineered systems are rarely produced in large numbers and are made to last rather than to fail. This results in small population sizes and a sparsity of failure examples and failure modes. However, current statistical methods and approaches can only utilise clearly labelled and distinguishable data sets.

A paper entitled "Deep-Compact-Clustering based Anomaly Detection Applied to Electromechanical Industrial Sensors" by Arellano-Espitia et al published in Sensors vol. 21 no 17 30 August 2021 describes an unsupervised anomaly detection framework. The method combines the training of a deep-autoencoder with clustering compact model and a one-class support-vector-machine function based outlier detection method. Another paper "Deep Multi-Task Learning for Anomalous Driving Detection using CAN Bus Scalar Sensor Data" by Vidyasagar et al published in Cornell University Library on 28 June 2019 describes semi-supervised anomaly detection which considers the imbalance of normal situations. The approach leverages domain-knowledge for anomaly detection in driving data.

It is an example aim of example embodiments of the present invention to at least partially overcome or avoid one or more problems of the prior art, whether identified herein or elsewhere, or to at least provide an alternative to existing systems and related methodologies.

### SUMMARY

According to first and second aspect of the present inventions, there is provided a method and a system for training an autoencoder as set out in in the independent claims. Further and optional features are described in the dependent claims.

We describe a method for training an autoencoder to classify behaviour of an engineering asset based on real-time data, wherein the autoencoder comprises an encoder and a decoder, the method of training comprising: obtaining training data and test data comprising multiple data records for at least one engineering asset which corresponds to the engineering asset whose behaviour is to be classified, wherein the data records comprise a plurality of sensor readings for the engineering asset; fitting the autoencoder to the obtained training data; running the test data through the encoder of the fitted autoencoder to obtain encodings of the test data; generating a plurality of data sets from the obtained encodings, wherein the generated plurality of data sets include under-represented data sets; cloning the fitted autoencoder to create a cloned autoencoder for each of the generated plurality of data sets; aggregating the cloned autoencoders to form an over-arching autoencoder; calculating an error data set between the training data and data reconstructed by the over-arching autoencoder, wherein the error data set comprises an absolute reconstruction error for each sample in the training data; obtaining, using the calculated error data set, estimated parameters for calculating an anomaly score for each data record, wherein the anomaly score is selected from a Mahalanobis distance and a squared Mahalanobis distance; and estimating, using the calculated error set, parameters for calculating a decomposition of the anomaly score to identify a contribution from each sensor reading to the calculated anomaly score. The method may further comprise building at least one output layer of the autoencoder to calculate the anomaly score and the decomposition of the anomaly score. The at least one output layer may classify the behaviour of the engineering asset as anomalous or not anomalous based on a comparison of the anomaly score with at least one anomaly threshold.

We also describe a system for training an autoencoder to classify behaviour of an engineering asset based on real-time data, wherein the system comprises a processor implementing an autoencoder comprising an encoder and a decoder, and the processor is configured to obtain training data and test data comprising multiple data records for at least one engineering asset which corresponds to the engineering asset whose behaviour is to be classified, wherein the data records comprise a plurality of sensor readings for the engineering asset; fit the autoencoder to the obtained training data; run the test data through the encoder of the fitted autoencoder to obtain encodings of the test data; generate a plurality of data sets from the obtained encodings, wherein the generated plurality of data sets include under-represented data sets; clone the fitted autoencoder to create a cloned autoencoder for each of the generated plurality of data sets; aggregate the cloned autoencoders to form an over-arching autoencoder; calculate an error data set between the training data and data reconstructed by the over-arching autoencoder; obtaining, using the calculated error data set, estimated parameters for calculating an anomaly score for each data record, wherein the anomaly score is selected from a Mahalanobis distance and a squared Mahalanobis distance; and estimating, using the calculated error set, parameters for calculating a decomposition of the anomaly score to identify a contribution from each sensor reading to the anomaly score. The system further comprises a user interface for outputting an indication of the classified behaviour to a user.

Under-represented data sets are typically data sets with insufficient data and which if used in isolation may lead to biased classifiers. Under-represented data sets are typically generated by unusual or infrequent behaviour of the engineering asset and thus the data sets do not occur very often (i.e. are under-represented) in the obtained encodings and/or training data. Under-represented data sets account for less than 10% of the total volume of training data. As explained in the background section above, some complex engineering systems are produced only in small numbers and are made to last rather than to fail. Accordingly, these systems typically have under-represented data sets because there are small population sizes and examples of data before failure of the system are rare. In other words, the data sets which capture data before failure of the system are typically under-represented in the overall training data and are an example of an under-represented data set. However, there are other examples of unusual behaviour, e.g. maximum power operation of the engineering asset, which also generate under-represented data sets. The training method aims to distinguish these other examples of unusual behaviour from the data sets which are generated before failure. Under-represented data sets may thus be defined as those that are badly reconstructed by the autoencoder algorithm but may include perfectly routine operations from an engineering perspective.

The invention may be implemented in a prognostics and health management (PHM) application which provides a measurement of anomaly (anomaly score) for users including operators and maintenance staff. The measurement is unitless and may also be termed a system state or metric. The invention may be used for monitoring any complex engineering asset whose operation may be described by a data set of sensor readings which include a plurality of physical parameters which are measured by a plurality of sensors. Merely as examples, such engineering assets may be within a marine vessel, for example a diesel engine or a high voltage switchboard. Such engineering assets may be in other systems, e.g. railway rolling stock bogies, nuclear reactor coolant pumps, gas turbine engines for passage aircraft or oil rig drill bearings.

In this context, the Mahalanobis distance (normal or squared) is termed an anomaly score. The Mahalanobis distance is a well-known calculation which may be described in this case as a measure of the distance between a given time-step vector of absolute reconstruction errors and the distributions and correlations of the previously retrieved reconstruction errors from the training data set. The anomaly score *aᵢ* at time *tᵢ* may be calculated using the normal (i.e. standard) Mahalanobis distance formula: ${a}_{i} = \sqrt{{\left({y}_{i}-\overline{u}\right)}^{T} {Σ}^{- 1} \left({y}_{i}-\overline{u}\right)}$ where *yᵢ* is an m dimensional vector of the absolute error between the input and reconstructed features at time instance *tᵢ*, *u̅* is a vector of reconstruction error means and Σ⁻¹ is the inverse covariance matrix of reconstruction errors across the feature space. Alternatively, the anomaly score *aᵢ* at time *tᵢ* may be calculated using the squared Mahalanobis distance formula: ${a}_{i}^{2} = {\left({y}_{i}-\overline{u}\right)}^{T} {Σ}^{- 1} \left({y}_{i}-\overline{u}\right)$ where the parameters are the same as above. Obtaining estimated parameters for calculating the anomaly score may comprise estimating the vector *u̅* of reconstruction error means, and the inverse covariance matrix Σ⁻¹ of reconstruction errors. These may be estimated using maximum likelihood estimation from a normal distribution. The estimate parameters for calculating the anomaly score may thus comprise the mean, variance and covariance parameters of a normal distribution.

The decomposition of the squared anomaly score may be obtained from: ${a}_{i}^{2} = {\sum }_{j = 1}^{m} {\left(1-{p}_{j}^{2}\right)}^{- 1 / 2} \left[{b}_{\left(j\right) mm}\left({y}_{j}-E\left(\left.{y}_{i}\right|{y}_{- j}\right)\right)\right] \left[\left({y}_{j}-{\overline{u}}_{j}\right)/{σ}_{j}\right]$ where *yᵢ* is an m dimensional vector of the absolute error between the input and reconstructed features at time instance *tᵢ*, *yⱼ* is the *j*-th component variable of *yᵢ* (a *m x 1* random vector) *and y-ᵢ* is the vector obtained from y by deleting its *j*th component variable, *u̅* is a vector of reconstruction error means, *σ* is a vector of reconstruction error standard deviations, Σ⁻¹ is the inverse covariance matrix of reconstruction errors across the feature space, *bₘₘ* is the vector containing the square root of the diagonal of Σ⁻¹ and with *u̅ⱼ* , *σⱼ* and *b*_{(*j*)*mm*} corresponding to the j-th component variable mean, standard deviation and element of the diagonal respectively, ${p}_{j}^{2}$ is the squared multiple correlation coefficient of *yⱼ* on the remaining variables *y₋ⱼ*, and *E*(*yⱼ*|*y*_{-*j*}) denotes the conditional expectation of *yⱼ* while all other variables *y₋ⱼ* are fixed. In this example, estimating the parameters for calculating a decomposition of the anomaly score may comprise estimating the vector *u̅* of reconstruction error means, the vector *σ* of reconstruction error standard deviations, the inverse covariance matrix Σ⁻¹ of reconstruction errors across the feature space, the vector *bₘₘ* containing the square root of the diagonal of Σ⁻¹, the squared multiple correlation coefficient ${p}_{j}^{2}$ and the conditional expectation *E*(*yⱼ*|*y*_{-*j*}). The vectors and matrix may be obtained by estimating the mean, variance and covariance parameters using a Normal Distribution *N*(*µ*, *σ,* Σ) via Maximum Likelihood estimation. The coefficient and the conditional expectation may be estimated using linear regression.

The method may further comprise setting at least one anomaly threshold, wherein an anomaly score above the at least one anomaly threshold is indicative of anomalous behaviour whereby the behaviour of the engineering asset may be classified as anomalous. An anomaly score below the anomaly threshold may be indicative of behaviour which is not anomalous. The at least one anomaly threshold may comprise two thresholds to further classify behaviour. The first threshold may be higher than the second threshold. An anomaly score above the first threshold may be indicative of the engineering asset operating in anomalous behaviour and an anomaly score below the first threshold may be indicative of the engineering asset operating in non-anomalous behaviour. The non-anomalous behaviour may be further classified as normal or abnormal (but not anomalous behaviour) by the second threshold. An anomaly score above the second threshold but below the first threshold may be indicative of the engineering asset operating in abnormal behaviour and an anomaly score below the second threshold may be indicative of the engineering asset operating in normal behaviour.

The threshold(s) for the anomaly score may be set by using a box-whisker approach for univariate outlier detection. It is noted that although both the Mahalanobis distance and box-whisker approach are well-known statistical methods, there is no teaching of this combination for PHM and they enable a novel full unsupervised training regime.

The decomposition of the anomaly score enables a novel root-cause analysis approach for identifying the main drivers of anomalous behaviour. In an example water pump system as described in more detail below, the decomposition allows the identification of suction pressure, motor speed or discharge pressure as the main cause of the identified anomalous behaviour.

The autoencoder may be a long short-term memory (LSTM) autoencoder. The encoder may receive an input *X* comprising a plurality of points *x⁽ⁱ⁾* each of which may be an m-dimensional vector at time instance *tᵢ*. The input is a multivariate time-series and each time step is a fixed time-window length cut from the time-series. The encoder may map the inputs to a latent dimension, for example as represented by: $z = σ \left(Wx+b\right)$ where W is a set of weights, b is a bias function and σ is the activation function. The decoder may generate reconstructed inputs *X*' comprising a plurality of reconstructed points *x'⁽ⁱ⁾* and may be represented as: $x ′ = σ ′ \left(W′z+b′\right)$ where W' is a different set of weights, b' is a different bias function and σ' is a different activation function. Fitting the autoencoder to the obtained training data may thus be defined as generating the weights and biasing functions which fit the data to the model. Cloning may be similarly defined as cloning the weights and biasing functions of the base model. The method comprises fitting each cloned autoencoder to one of the generated plurality of data sets. Since the input and output are the same input sequences, this is typically called self-supervised learning.

Dependencies may be injected into at least one of the encoder and decoder. The dependencies may represent features arising from embedding the engineering asset in a wider system. For example, when modelling a water pump, a dependency may be the valve positions along the water mains which serve the water pump. The dependencies may be n-dimensional vectors where the length of the vector n may be same or different to the length m of the input vector. Incorporating these dependencies improves the generalizability of the algorithm because it captures the statistical variability of the overall system.

Generating the plurality of data sets comprises applying a KDtree algorithm to the obtained encodings. In addition to the KDtree algorithm, a clustering analysis may be applied to the obtained encodings.

The KDtree algorithm and the cluster analysis may be applied simultaneously. Applying a clustering analysis may comprise fitting multiple clustering algorithms over the obtained encodings; selecting the best clustering algorithm and obtaining a plurality of clusters by fitting the selected clustering algorithm to the training data; whereby the generated plurality of data sets comprise the plurality of clusters. Applying a KDtree algorithm may comprise fitting the KDtree algorithm on the obtained encodings; selecting an under-represented data set generated by the fitting step; and finding multiple data sets which are most similar to the selected data set; whereby the generated plurality of data sets comprise the selected data set and the multiple data sets.

Aggregating the cloned autoencoders to form an over-arching autoencoder may be done using bagging. Aggregating comprises using voting to aggregate predictions from each of the cloned autoencoders. A time-stepwise extraction method may be used for the voting. The method may further comprise running the training data through the over-arching autoencoder to obtain reconstructed data.

The combination of expanding the data, e.g. by running clustering and KDtree algorithms, together with the aggregation of the cloned autoencoders allows the building of a multi-model algorithm that addresses the manifold operating envelop, environment, machine-ageing and data capture issues simultaneously. It is achieved by the very nature of the autoencoder that effectively runs a time encompassing dimensionality reduction on the given time window. This enables the results to be treated as random variables that capture the underlying non-linear statistics of the engineering assets. By running clustering and KDtree algorithms and a, similar observations may be retrieved and then used to train clones of the same autoencoder model.

Once the autoencoder is trained, it may be used to classify behaviour and provide real-time anomaly detection and failure prediction. Thus, according to another aspect of the invention, there is provided a method for classifying behaviour of an engineering asset based on real-time data, the method comprising: receiving a data record comprising data on the engineering asset collected from a plurality of sensors at time t; classifying, using a trained autoencoder, behaviour of the engineering asset based on the received data record; and outputting an indication of the classified behaviour to a user.

According to another related aspect of the invention, there is provided a system for classifying behaviour of an engineering asset based on real-time data, the system comprising: a plurality of sensors; a processor which is configured to receive a data record comprising data on the engineering asset collected from the plurality of sensors at time t; and classify, using a trained autoencoder, the behaviour of the engineering asset based on the received data record; and a user interface for outputting an indication of the classified behaviour to a user.

The autoencoder may be trained as described above. Classifying behaviour may comprise calculating, using the trained autoencoder, an anomaly score from the received data record, comparing the calculated anomaly score to the at least one threshold and classifying behaviour of the engineering asset as anomalous when the calculated anomaly score is above the threshold. Classifying behaviour may further comprise, obtaining, using the trained autoencoder, a decomposition of the calculated anomaly score, wherein the decomposition shows individual contributions from the plurality of sensors to the calculated anomaly score. For example, when behaviour is classified as anomalous, the individual contributions may be used to indicate which sensor provides a highest contribution and thus is indicative of the component within the engineering asset which is most likely to be contributing to the anomalous behaviour.

When behaviour is classified as anomalous, an alert may be output, for example to act as a decision aid to a user. The alert may identify which component is indicative of the component which is most likely to be causing the anomalous behaviour. Alternatively, when behaviour is classified as anomalous, an automated self-protection protocol within the asset may be triggered to control one or more components within the asset to return the asset to normal behaviour. For example where a component is indicated as being most likely to be contributing to the anomalous behaviour, the behaviour of the component may be controlled (e.g. suction pressure, motor speed or discharge pressure within a pump may be adjusted or controlled).

The data records within the training data correspond to the data record which is received for prediction purposes. In other words, the training data comprises data records having data collected from the same set of sensors. The training data may be stored on a database which may be separate to the system which implements the prediction. Indeed, the training may be carried out on a separate system and the trained algorithm transferred to the prediction system when required.

According to another aspect of the invention, there is a non-transitory computer-readable medium comprising processor control code which when running on a system causes the system to carry out the method described above.

The invention described above may be used to overcome the aforementioned problems of statistical generalisability. Furthermore, the invention may be able to deal with multi-mode environments, failures, data regimes and a mainly unsupervised learning procedure. It is noted that the general field of statistic and machine learning does provide techniques such as boosting, bagging or stacking but typically fails to address the (semi-) unsupervised nature of the problem. Even the LSTM autoencoder architecture described by Malhorta et al in 2016 only accidentally addresses parts of the problems and needed further expansion as described above to address the issues.

It will be appreciated that any one or more features described in relation to an aspect of the invention may replace, or be used in combination with, any one or more features described in relation to another aspect of the invention, unless such replacement or combination would be understood by the skilled person as mutually exclusive, after a reading of this disclosure. In particular, any features described in relation to apparatus-like aspects may be used in combination with, or in place of, any features described in relation to method-like aspects. They may also be carried out in any appropriate order.

### BRIEF DESCRIPTION OF THE DRAWINGS

For a better understanding of the invention, and to show how embodiments of the same may be carried into effect, reference will now be made, by way of example, to the accompanying diagrammatic figures in which:
Figure 1 is a schematic illustration of a system for detecting anomalous system behaviour;
Figure 2 is a schematic illustration of an autoencoder for incorporation in the system of Figure 1;
Figures 3a and 3b are a flowchart setting out the steps carried out when training the autoencoder of Figure 1;
Figure 4a plots the variation in shaft speed (rpm) against time for the control time series (blue) and four most similar observations from the training data;
Figure 4b plots the variation in temperature (C) against time for the thrust block at the forward face for the control time series (blue) and four most similar observations from the training data;
Figure 4c plots the variation in temperature (C) against time for the thrust block at the anterior face for the control time series (blue) and four most similar observations from the training data;
Figure 4d plots the variation in temperature (C) against time for the plummer bearing for the control time series (blue) and four most similar observations from the training data;
Figure 4e plots the variation in temperature (C) against time for the shaft stem seal for the control time series (blue) and four most similar observations from the training data;
Figure 5 plots the latent dimension showing the 500 most closely related time series based on the control series in Figures 4a to 4e;
Figure 6 plots the sample mean Mahalanobis distance;
Figure 7a plots the variation in current (ampere) against time for the motor current for the validation and verification data from a CHW circulation pump;
Figure 7b plots the variation in pressure (bar) against time for the pump discharge for the validation and verification data from a CHW circulation pump;
Figure 7c plots the variation in pressure (bar) against time for the pump suction for the validation and verification data from a CHW circulation pump;
Figure 7d plots the variation in Mahalanobis distance with time for the CHW circulation pump;
Figure 7e plots the decomposition of the Mahalanobis distance in Figure 7d showing the contributions for each of the motor current, the discharge pressure and the suction pressure of Figures 7a to 7c;
Figure 8a is a flowchart of the steps of analysing behaviour of an engineering asset using the trained autoencoder of Figure 2;
Figure 8b plots over time the anomaly trend (i.e. Mahalanobis distance) for a CHW circulation pump generated using the method of Figure 8a; and
Figure 8c plots over time the anomaly breakdown for the anomaly trend of Figure 8b showing the contribution from each of the motor current, the discharge pressure and the suction pressure.

### DETAILED DESCRIPTION

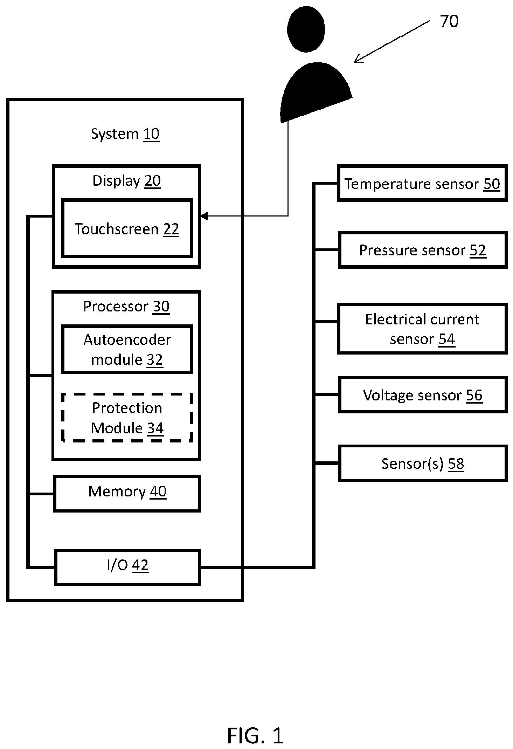

Figure 1 schematically shows an example embodiment comprising a management system 10 for monitoring an engineering asset. The engineering asset may be on a marine vessel, for example chilled water (CHW) plants, transmission, starboard shaft, port shaft, one or more CHW circulation pumps, gas turbine, converters, DBRs, propulsion motor, high voltage (HV) switch board, low voltage (LV) switchboard, HV filters, HV/LV transformers, LV filters, diesel generators, emergency generators, heating, ventilation and air conditioning (HVAC) system, pressurised air, fresh water system, salt water (SW) system. It will be appreciated that the management system may also be used on other system, e.g. railway rolling stock bogies, nuclear reactor coolant pumps, gas turbine engines for passage aircraft or oil rig drill bearings.

The management system 10 is connected to a plurality of sensors, including a temperature sensor 50, a pressure sensor 52, an electrical current sensor 54, a voltage sensor 56 and other sensor(s) 58, e.g. a sensor to measure the mass of any fluids in the system. It will be appreciated that the depicted sensors are merely illustrative, and any suitable sensors may be included in the overall system. The combination of sensors may record a plurality of physical parameters which alone or together with digital parameters describing the configuration of the system, e.g. valve positions in a piping assembly, are indicative of whether the engineering asset is operating in a healthy or faulty state.

Some of the internal detail of the display system 10 is shown in Figure 1. There are standard components of whichever hardware solution is deployed, including for example a display 20, a processor 30, memory 40 and an interface 42 for connecting with the sensors 50, 52, 54, 56, 58. The display may include a touchscreen 22 or may be any other suitable display on which information (including an alert) may be displayed to a user 70. The management system 10 is also connected to a database 60 which may be located remotely (i.e. in a different location) from the management system, including for example in the cloud. The database 60 comprises training data 62 which is used to train the management system as described in more detail below. It will be appreciated that there may be other standard components which are omitted for clarity.

The processor 30 may process the received sensor data and training data in any appropriate way. As illustrated, the specific processing may be completed in dedicated modules, e.g. an autoencoder module 32 or an optional protection module 34. Terms such as 'component,' 'module', 'processor' or 'unit' used herein may include, but are not limited to, a hardware device, such as circuitry in the form of discrete or integrated components, graphics processing units (GPUs), a Field Programmable Gate Array (FPGA) or Application Specific Integrated Circuit (ASIC), which performs certain tasks or provides the associated functionality. In some embodiments, the described elements may be configured to reside on a tangible, persistent, addressable storage medium and may be configured to execute on one or more processors. These functional elements may in some embodiments include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. Although the example embodiments have been described with reference to the components, modules and units discussed herein, such functional elements may be combined into fewer elements or separated into additional elements.

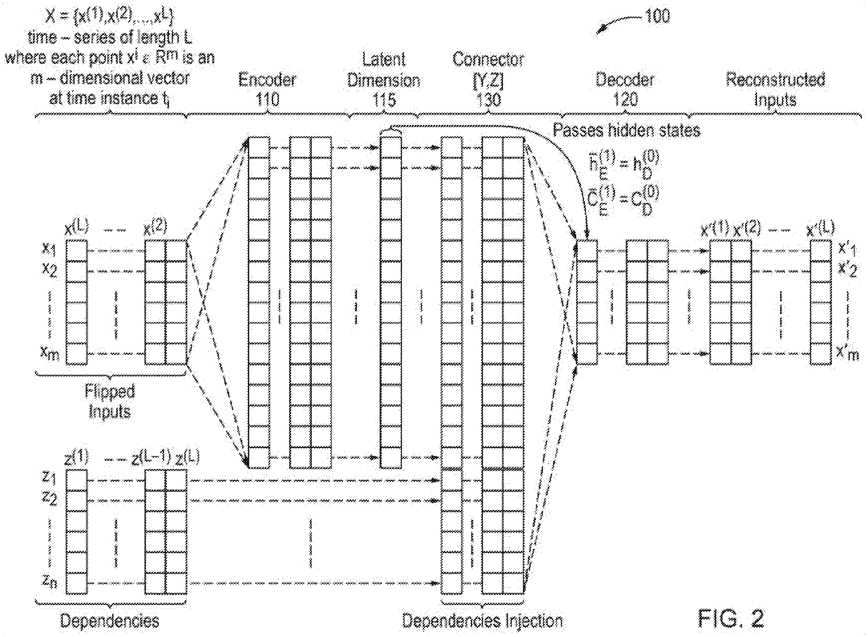

Figure 2 is an illustration of a long short-term memory (LSTM) autoencoder 100 which may be incorporated in the system of Figure 1. An LSTM autoencoder is a recurrent neural network which has feedback connections and which is well-suited to classifying, processing and making predictions based on time series data. LSTM autoencoders are well known in the art and are described in more detail for example in "Long Short-Term Memory Networks for Anomaly Detection in Time Series" by Malhotra et al published at the 23rd European Symposium on Artificial Neural Networks, Computational Intelligence and Machine Learning, ESANN 2015 or "Long Short-Term Memory" by Hochreiter et al. published in Neural Computation in 1997 which are herein incorporated by reference.

Figure 2 shows that the autoencoder comprises an encoder 110 which is a neural network comprising a plurality of layers. The encoder 110 receives an input X which comprises a plurality of points *x⁽ⁱ⁾* The input data is combined and reshaped into a three-dimensional sample-major tensor of shape samples, time-steps and features. The input X is thus defined as: $X = \left\{{x}^{\left(1\right)},{x}^{\left(2\right)},…,{x}^{\left(L\right)}\right\}$ ${x}^{\left(i\right)} ∈ {R}^{m}$ where L is the length of the time-series and where *x⁽ⁱ⁾* is an m dimensional vector at time instance *tᵢ*. The time-series is an underlying multivariate time-series and each time step is a fixed time-window length cut from the time-series. The features within the vector *x⁽ⁱ⁾* are any suitable combination of variables, e.g. sensor readings such as motor current or derived environmental information such as "rough sea." For example, when evaluating an engineering system, *x⁽ⁱ⁾* may be a vector having m sensor measurements at time instance *tᵢ*. As shown in Figure 2, the inputs are flipped before mapping to the encoder 110.

The encoder 110 maps the inputs to a latent dimension 115. As is well known in the art, if z is the latent dimension, the encoder 110 can be represented by the standard neural network function passed through an activation function, i.e. $z = σ \left(Wx+b\right)$ where W is a set of weights, b is a biasing function and σ is the activation function.

The autoencoder also comprises a decoder 120. The decoder 120 generates reconstructed inputs X' which comprises a plurality of reconstructed points *x'⁽ⁱ⁾* The reconstructed inputs X' are thus defined as: $X ′ = \left\{x{′}^{\left(1\right)},x{′}^{\left(2\right)},…,x{′}^{\left(L\right)}\right\}$ $x {′}^{\left(i\right)} ∈ {R}^{m}$ where L is the length of the time-series and where *x'⁽ⁱ⁾* is an m dimensional vector at time instance *tᵢ*. Using a similar notation to that for the encoder, the decoder 120 may be represented as $x ′ = σ ′ \left(W′z+b′\right)$ where W is a different set of weights, b' is a different biasing function and σ' is a different activation function. The algorithm may then be trained by fitting the algorithm to the training data and generating iterative updates to the weights and biases of the model. Since the input and output are the same multi-variate time sequences, this is typically called self-supervised learning.

A connector 130 is connected between the latent dimension 115 and the decoder 120. The connector 130 is used to inject the dependencies Z which are defined as: $Z = \left\{{z}^{\left(1\right)},{z}^{\left(2\right)},…,{z}^{\left(L\right)}\right\}$ ${z}^{\left(i\right)} ∈ {R}^{m}$ where L is the length of the time-series and where *z⁽ⁱ⁾* is an n dimensional vector at time instance *tᵢ*, *n* may be the same or a different number to *m*. In this example, the dependencies are only included in the decoder 120 but they may also be passed to the encoder 110.

The dependencies may be defined as binary and metric features which are system dependencies or confounders which arise from embedding the specific engineering asset within a wider-system, manifold operating environment and different data gathering regimes. For example, when modelling a water pump, the inputs may include motor current, suction and discharge pressure and the dependencies may include wider system load such as valve positions along the water mains which serve and which are served by the water pump. Failing to adequately model these dependencies may mean that the algorithm is not statistically generalizable because it may fail to capture the statistical variability of the system enough to give unambiguous information to the user.

It is also noted that the decoder 120 receives the hidden and memory states of the encoder from the latent dimension 115 to be used as initialisation of the decoder's hidden and memory states. The hidden and memory states are defined as: ${\overline{h}}_{E}^{\left(1\right)} = {h}_{D}^{\left(0\right)}$ ${\overline{c}}_{E}^{\left(1\right)} = {c}_{D}^{\left(0\right)}$ *where h_{E}* and *h_{D}* are the states of the hidden layer of the encoder and the decoder at time tᵢ, respectively and c_{E} and c_{D} are the memory states of the encoder and decoder, respectively. As an example, the table below is a summary of a general dependencies-based autoencoder such as the one described above and which has been created with the standard package, TensorFlow.

| Layer (type) | Output shape | Parameters (number) | Connected to |
|---|---|---|---|
| AllInputs (Input layer) | (None, 240, 15) | 0 | |
| Z-scaling (Lambda) | (None, 240, 15) | 0 | AllInputs [0][0] |
| TheLastEncoder (LSTM) | [(None, 30), (None,30)] | 5640 | Z-scaling [0][0] |
| ConnectorLayer (RepeatVector) | (None, 240, 30) | 0 | TheLastEncoder[0][0] |
| DependenciesInput (Lambda) | (None, 240, 12) | 0 | Z-scaling [0][0] |
| DecoderInput (Concatenate) | (None, 240, 42) | 0 | ConnectorLayer[0][0] |
| | | | DependenciesInput[0][0] |
| EncoderStateH | (None, 3) | 0 | TheLastEncoder[0][1] |
| EncoderStateC | (None, 3) | 0 | TheLastEncoder[0][2] |
| TheFirstDecoder (LSTM) | (None, 240, 30) | 564 | DecoderInput [0][0] |
| | | | EncoderStateH[0][0] |
| | | | EncoderStateC[0][0] |

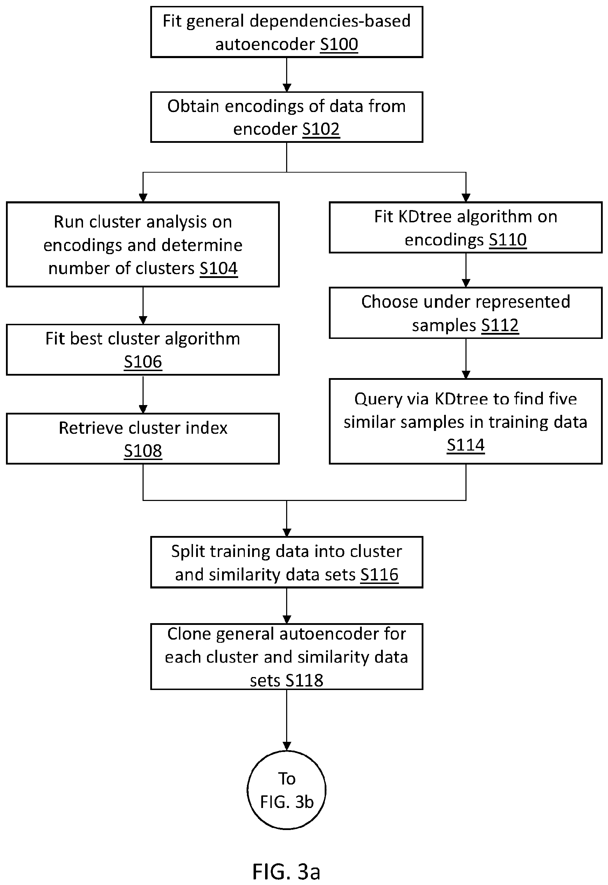

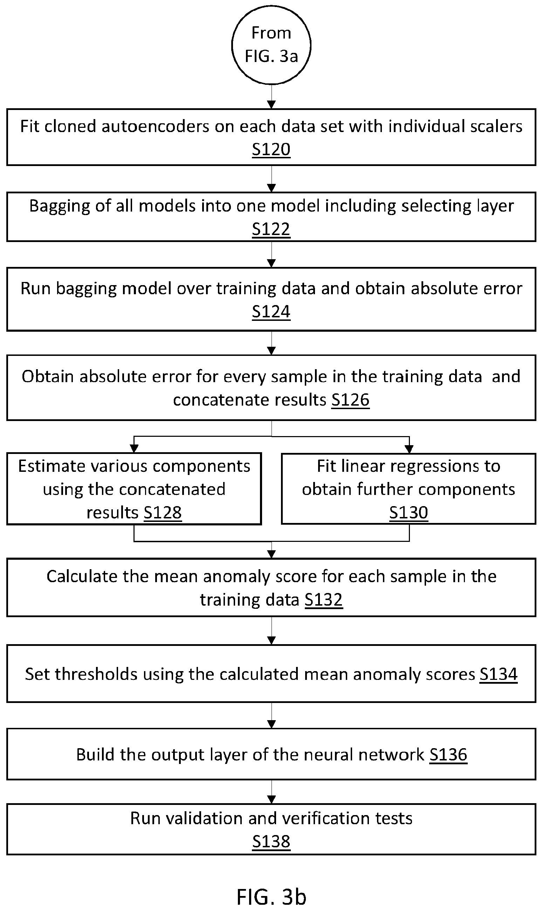

Figures 3a and 3b form a flowchart illustrating how an autoencoder, such as the one shown in Figures 1 and 2, is trained according to the invention. The training may be considered to be a model expansion approach that retrieves training data through clustering the overall autoencoder encodings and running additional similarity searches via a KDtree algorithm for under-represented observations. Clones of the autoencoder model are then trained using the observations from the clustering and KDtree algorithms. Once the clones are fitted, a time-stepwise extraction method is incorporated for a voting part of the bagging stage. The voting is not fitted as is the norm, but is a direct mean squared error comparison between models across each-time slice. The model that minimises the error across a time-slices provides the output/ reconstruction for that time-slice. The Mahalanobis distance measure and its decomposition is then incorporated into the algorithm as explained in more detail below.

The training begins when a training data set together with validation and verification data sets are received or otherwise obtained. The training data may be historical data from the engineering asset which has been collected over a number of months or even years. For example, if the engineering asset is a component of a marine vessel, the training data may have been collected across multiple ships of the same class over months or years. The training data may be built by querying a data storage facility and preparing a dataset from the queried data. Preparing may include choosing features within the data, choosing the running periods (domain knowledge), cutting training sample-major sequences and general data science pre-processing.

As illustrated in Figure 3, in a first step S100, the autoencoder is fitted to the training data. For example, a cost function may be used to iteratively update the weights and the bias functions of the encoder and decoder as is well known in the art. The autoencoder is dependencies-based because the dependencies are incorporated in the decoder and/or encoder.

Once the autoencoder has been fitted to the training data, each of the training, test and validation data sets are run through the encoder only (step S102). The encodings may be retrieved or extracted from the latent dimension layer or the last layer in the encoder (e.g. TheLastEncoder in the table above). In the next stage, there are two different routes which are running in parallel. It will be appreciated that the routes may be run sequentially but it is more efficient to run them simultaneously. A clustering analysis may be run on the obtained encodings (step S104). The clustering analysis comprises fitting multiple k-means clustering algorithm set-ups over the extracted encodings. An example of a suitable clustering analysis is described in "Cluster analysis of multivariate data: efficiency versus interpretability of classifications" by Forgy, Edward W. published in Biometrics. 21 (3): 768-769 (1965).

As shown, the number of clusters for each clustering algorithm is determined and the best algorithm is determined. The number of clusters may be selected by the user, i.e. by the researcher conducting the training. Selecting the best algorithm may be done by any suitable method, e.g. by calculating a silhouette score and selecting the algorithm with the highest silhouette score. The calculation of silhouette scores is described, for example in "Silhouettes: a Graphical Aid to the Interpretation and Validation of Cluster Analysis" by Rousseeuw published in Computational and Applied Mathematics 20: 53-65, 1987. Once the best algorithm has been determined, at step S106 the best clustering algorithm is re-fit to the training data and the cluster prediction (or cluster index) is retrieved at step S108.

A KDtree algorithm is used to extract under-represented data, e.g., by proximity searching the two-dimensional latent space of a three-dimensional representation. Under-represented data sets are data sets which are under-represented in the training data, because they represent less than 10% of the total volume of training data. By using proximity searching, a data set containing only most similar examples may be found and built. The examples which are of interest are those that are badly reconstructed by the autoencoder algorithm because they occur very infrequently but are perfectly routine operations (e.g. maximum power) from an engineering perspective. An example of a KDtree algorithm is described in "Multidimensional binary search trees used for associative searching" by Bentley, J.L. published in Communications of the ACM. 18 (9): 509-517 1975.

In a first step S110, the KDtree algorithm is fit on the obtained encodings. In a next step S112, the under-represented samples are selected (or chosen) based on the algorithm output and domain knowledge. In step S114, these selected samples are used to query the KDtree to find the five most similar other examples. In this way, new data sets containing under-represented states may be built up. The training data (and hence obtained encodings) does not typically include data sets from systems which have failed and thus there are not normally samples for the times leading to failure of the system. As explained previously, such data sets would typically be under-represented, i.e. occur infrequently and the autoencoder is being trained to recognise these data sets as representing anomalous behaviour. Instead, the under-represented samples which are chosen at step S112 are indicative of rare but non-anomalous behaviour so that the autoencoder is trained to recognise the difference between these under-represented data sets and the data sets representing anomalous behaviour.

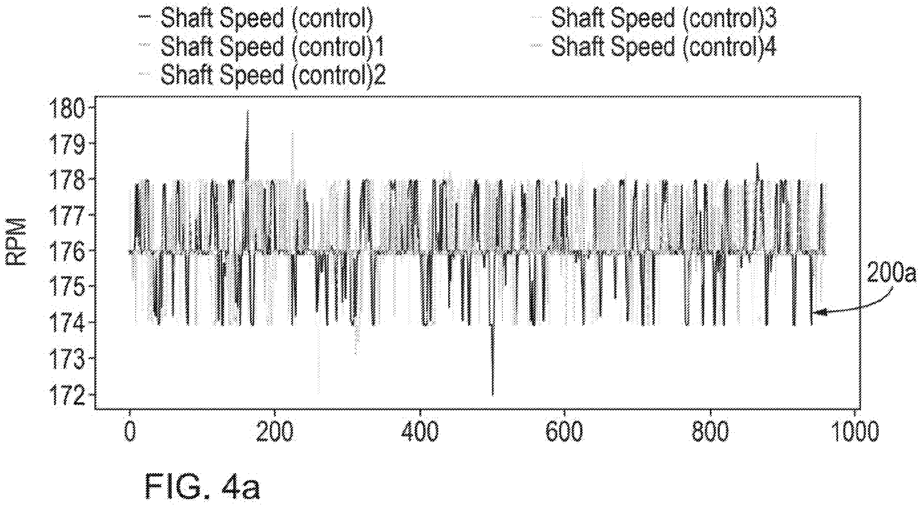

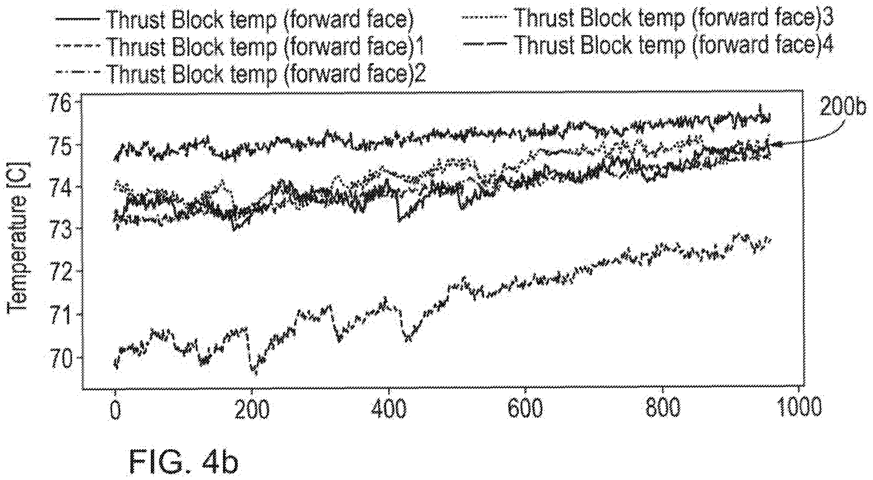

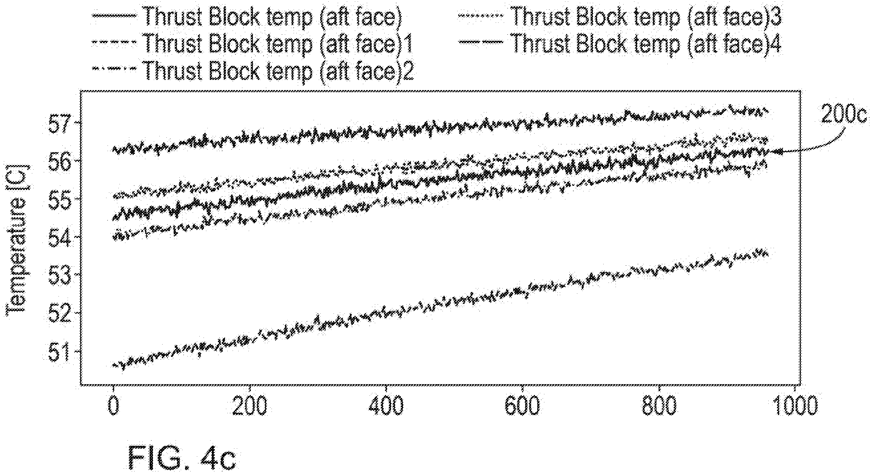

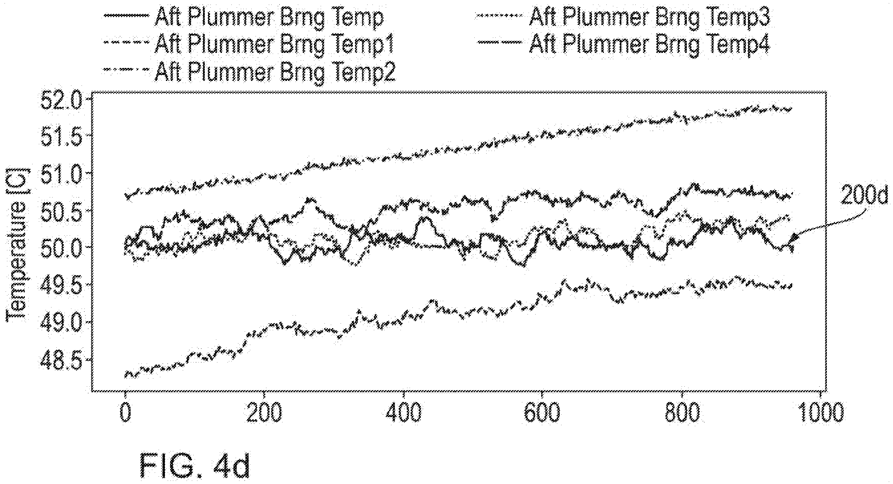

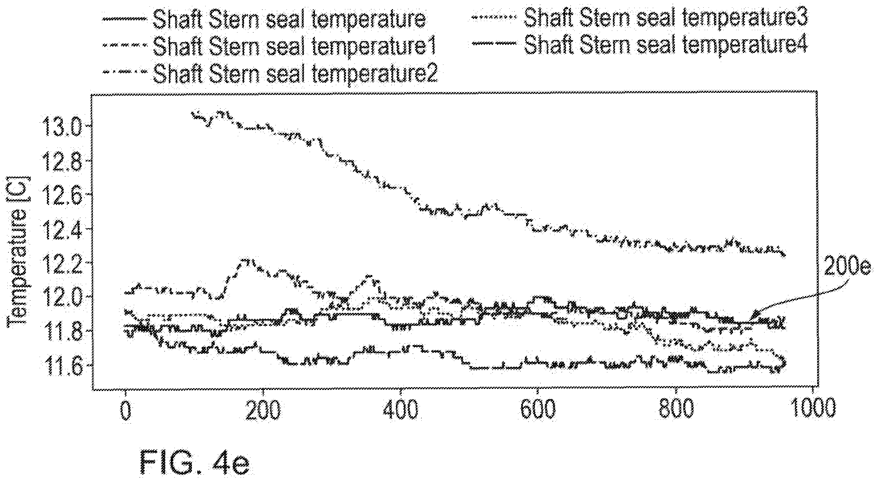

As an illustrative example, a transmission shaft-line is modelled and the output of step S114 is shown in Figures 4a to 4e. The inputs for the modelled transmission shaft-line include the shaft speed (rpm), the temperature (C) for the thrust block at the forward face, the temperature (C) for the thrust block at the anterior face, the temperature (C) for the anterior plummer bearing and the temperature (C) for the shaft stem seal. Each of Figures 4a to 4e plots the variation over time for these inputs as encoded by the encoder. In each of the Figures, a control time series (shown in blue and labelled 200a, 200b, 200c, 200d, 200e respectively) is selected as an under-represented sample. The four most similar time series are also plotted in the Figures to illustrate how five most similar observations are extracted from the latent dimension (or final layer of the encoder) for the training data set based on the control time series.

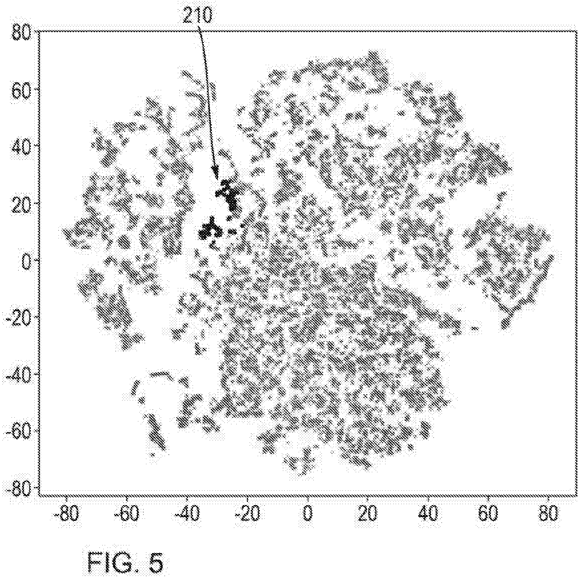

Figure 5 illustrates a two-dimensional visual representation showing the 500 more closely related time-series (in red and labelled 210) based on the control time series of Figures 4a to 4e. The representation of Figure 5 is created for visualisation purposes only, for example using a t-distributed stochastic neighbour embedding (TSNE) algorithm.

Returning to Figure 3a, the results from the two routes are combined at step S116. The two routes are used to split the training data into a plurality of clusters and a plurality of similarity data sets (for example those shown in Figures 4a to 4e). In the next step S118, the autoencoder algorithm generated at step S100 (which may be termed the base model) is then cloned to generate a cloned algorithm for each of the clusters and similarity data sets generated in step S116. Cloning the base model includes cloning its trained weights and biasing function from step S100. Each cloned autoencoder is then fit to its respective data set which includes one of the clusters and one of the similarity data sets (step S120). The fitting may include using an adjusted and individual scaler for each data set.

In the next step S122, each of the cloned autoencoders is aggregated or bagged (bootstrap aggregation) into a single over-arching model. Any suitable method of combining the individual models may be used, e.g. bootstrap aggregating. Such methods typically use voting to aggregate the predictions from each of the cloned autoencoder. A time-stepwise extraction method may be used for the voting part of the bagging stage. In this arrangement, a direct error comparison between the outputs of each of the cloned autoencoders may be used on each time slice. It will be appreciated that is a deviation from the normal method used in voting.

The table below gives an example structure of a bagged autoencoder model.

| Layer (type) | Output shape | Parameters (number) | Connected to |
|---|---|---|---|
| EnsembleInputs (Input layer) | (None, 240, 15) | 0 | |
| SlicedInputs (Lambda) | (None, 240, 3) | 0 | EnsembleInputs[0][0] |
| ModelAllData (Model) | (None, 240, 3) | 6204 | EnsembleInputs[0][0] |
| Cluster0 (Model) | (None, 240, 3) | 6204 | EnsembleInputs[0][0] |
| Cluster1 (Model) | (None, 240, 3) | 6204 | EnsembleInputs[0][0] |
| Cluster2 (Model) | (None, 240, 3) | 6204 | EnsembleInputs[0][0] |
| Cluster3 (Model) | (None, 240, 3) | 6204 | EnsembleInputs[0][0] |
| ExtractBestRecon (Lambda) | (None, 240, 3) | 0 | ModelAllData[1][0] |
| | | | Cluster0[1][0] |
| | | | Cluster1[1][0] |
| | | | Cluster2[1][0] |
| | | | Cluster3[1][0] |
| | | | SlicedInputs[0][0] |
| OutputLayer (Lambda) | (None, 12) | 0 | SlicedInputs[0][0] |
| | | | ExtractBestRecon[0][0] |

The bagged model is run over the training data at step S124 to obtain the absolute reconstruction error which is the error between the reconstructed data set and the original training data set. Each time-step within the absolute reconstruction error is treated as its own sample, thus forming a multi-variate reconstruction error. The absolute reconstruction error of the autoencoder for a given sample may be defined as: $Y = \left|X-X′\right|$ $\begin{matrix}Y = \left\{{y}^{\left(1\right)},{y}^{\left(2\right)},…,{y}^{\left(L\right)}\right\} \\ {y}^{\left(i\right)} ∈ {R}^{m}\end{matrix}$ where L is the length of the time-series and where *y⁽ⁱ⁾* is an m dimensional vector of the absolute error between the input and reconstructed features at time instance *tᵢ*.

The final phase of the process incorporates the Mahalanobis distance statistics and calculations. The Mahalanobis distance is defined for example in "On the generalised distance in statistics" by Mahalanobis, Prasanta Chandra published in Proceedings of the National Institute of Science of India. 2 (1): 49-55 (1936) or "Multivariate Outliers and Decompositions of Mahalanobis Distance" by Kim published in Commun Statist. Theory Meth 29(7), 1511-1526 (2000). The Mahalanobis distance may be termed an anomaly score for the engineering asset. The generic Mahalanobis Distance of *x* from *µ* is given by equation (3) and the squared Mahalanobis Distance of *x* from *µ* by equation (4): $\sqrt{{\left(x-μ\right)}^{T} {Σ}^{- 1} \left(x-μ\right)}$ ${\left(x-μ\right)}^{T} {Σ}^{- 1} \left(x-μ\right)$ where *x* is a *d x 1* random vector with mean vector *µ* and covariance matrix Σ

The decomposition of the squared Mahalanobis Distance may also be used and this may be written as: ${\left(x-μ\right)}^{T} {Σ}^{- 1} \left(x-μ\right) = {\sum }_{i = 1}^{d} {\left(1-{p}_{i}^{2}\right)}^{- 1 / 2} \left[{b}_{\left(i\right) dd}\left({x}_{i}-E\left({x}_{i}\left|{x}_{- i}\right.\right)\right)\right] \left[\left({x}_{i}-{\overline{x}}_{i}\right)/{σ}_{i}\right]$ where *xᵢ* is the i-th component variable of *x* (a *d x 1* random vector), *x₋ᵢ* is the vector obtained from x by deleting its *i*-th component variable, *pᵢ* is the multiple correlation coefficient between *xᵢ* and *x*₋, *x̅ᵢ* is the mean of *xᵢ*, ${σ}_{i}^{\begin{matrix} \\ 2\end{matrix}}$ is the variance of *xᵢ, E*(*xᵢ*|*x₋ᵢ*) denotes the conditional expectation of *xᵢ* when the other variables in *x*_{-*i*} are fixed, *b*_{(i)dd} is the entry in the final row and final column of the upper triangular matrix Bᵢ such that ${Σ}_{\left(i\right)}^{- 1} = {B}_{\left(i\right)} {B}_{\left(i\right)}^{T}$ where Σ⁻¹ is the covariance matrix of *x₋ᵢ.*

In this example, the generic Mahalanobis distance formulae set out above are rewritten to fit the notations and describe the anomaly score *aᵢ* at time *tᵢ*: ${a}_{i} = \sqrt{{\left({y}_{i}-\overline{u}\right)}^{T} {Σ}^{- 1} \left({y}_{i}-\overline{u}\right)}$

Or the squared anomaly score at *tᵢ*: ${a}_{i}^{2} = {\left({y}_{i}-\overline{u}\right)}^{T} {Σ}^{- 1} \left({y}_{i}-\overline{u}\right)$

The decomposition of the squared anomaly score is: ${a}_{i}^{2} = {\sum }_{j = 1}^{m} {\left(1-{p}_{i}^{2}\right)}^{- 1 / 2} \left[{b}_{\left(j\right) mm}\left({y}_{j}-E\left({y}_{j}\left|{y}_{- j}\right.\right)\right)\right] \left[\left({y}_{j}-{\overline{u}}_{j}\right)/{σ}_{j}\right]$ where *yᵢ* is an m dimensional vector of the absolute error between the input and reconstructed features at time instance *tᵢ*, *yⱼ* is the j-th component variable of *yᵢ* (a *m x 1* vector), *y-ᵢ* is the vector obtained from y by deleting its *j*th component variable, *u̅* is a vector of reconstruction error means, *σ* is a vector of reconstruction error standard deviations, Σ⁻¹ is the inverse covariance matrix of reconstruction errors across the feature space, *bₘₘ*is the vector containing the square root of the diagonal of Σ⁻¹ and with *u̅ⱼ* , *σⱼ* and *b*_{(*j*)*mm*} corresponding to the j-th component variable mean, standard deviation and element of the diagonal respectively, ${p}_{j}^{2}$ is the squared multiple correlation coefficient of *yⱼ* on the remaining variables *y₋ⱼ*, and *E*(*yⱼ*|*y₋ⱼ*) denotes the conditional expectation of *yⱼ* while all other variables *y₋ⱼ* are fixed.

It will be appreciated that the relative contribution from each decomposed feature does not change between the squared Mahalanobis Distance of the standard Mahalanobis Distance. For example if the value of the squared Mahalanobis Distance is 4 and the values of its three decomposed features may be: f₁=2, f₂=1 and f₃=1. This translates to relative contributions as follows: f₁=0.5, f₂=0.25 and f₃=0.25. Thus, if we consider the square root of the squared Mahalanobis Distance (i.e. 2), the values of the same three decomposed features can be determined as f₁=2*0.5=1, f₂=1*0.25=0.25 and f₃=1*0.25=0.25. The sum of these features: f₁+ f₂+f₃=2. Thus, the decomposition can be calculated for both the Mahalanobis Distance as well as the squared Mahalanobis Distance.

To create the summary statistics necessary for the Mahalanobis Distance and the decomposition, the absolute reconstruction error Y for every sample in the training data set is constructed and the results are concatenated (step S126). In this example, the results are concatenated along the sample axis to create a timeless two-dimensional representation *U* where every features' absolute reconstruction error becomes a random variable for P observations: $\begin{matrix}U = \left\{{u}^{\left(1\right)},{u}^{\left(2\right)},…,{u}^{\left(P\right)}\right\} \\ {u}^{\left(i\right)} ∈ {R}^{m}\end{matrix}$ where *P* is the number of observations comprised of *N* samples in the training data set multiplied by *L* the fixed number of time steps within the time-series of each sample and *u*^{(*i*)} is an m dimensional vector of the absolute error between the input and reconstructed features *yⱼ* at a given observation.

The next step S128 is to use *U* to obtain various components (vectors and matrix) which are required to calculate the normal and squared Mahalanobis distances. In this step, the vector *u̅* of reconstruction error means, the vector *σ* of reconstruction error standard deviations, the inverse covariance matrix Σ⁻¹ of reconstruction errors across the feature space, and the vector *bₘₘ* containing the square root of the diagonal of Σ⁻¹. These vectors and matrix may be obtained by estimating the mean, variance and covariance parameters using a Normal Distribution *N*(*µ*, *σ,* Σ) via Maximum Likelihood estimation.

The next step S130 is to obtain the final components required to calculate the normal and squared Mahalanobis distances. These final components may be obtained by linear regressions which include an intercept for each feature of *m* on the remaining features of *U*. The linear regressions yield ${p}_{j}^{2}$ - the squared multiple correlation coefficient of *yⱼ* on the remaining variables *y₋ⱼ*. This is equivalent to the unadjusted *R*² of the corresponding linear regression. The linear regressions also yield *E*(*yⱼ*|*y*_{-*j*})which denotes the conditional expectation of *yⱼ* while all other variables *y₋ⱼ*. are fixed. This is equivalent to the regression line of *yⱼ* on *y₋ⱼ.*

Steps S128 and S130 are shown as being carried out in parallel but it will be appreciated that they may be carried out sequentially in any order. Once all the components have been obtained the Mahalanobis distance (normal and/or squared) may be calculated directly or via summation of each feature's decomposition. Now that the system has been trained to calculate the Mahalanobis distance at least one Mahalanobis distance or anomaly score threshold which is used to categorise the behaviour of the engineering asset as anomalous or non-anomalous (normal) may now be obtained.

For example, to classify a sample as normal, abnormal or anomalous, general thresholds must be obtained first in two steps. In a first step (S132), the mean anomaly score *a̅* is calculated for every sample of the training data set, resulting in the vector: $A = \left[{\overline{a}}_{1},{\overline{a}}_{2},⋯{\overline{a}}_{N}\right]$ where N is the number of samples in the training set.

The mean anomaly score *a̅* may also be calculated in two steps. In a first step, the anomaly score (normal or squared) *aᵢ* or ${a}_{i}^{2}$ is calculated for every *tᵢ* from *Y* in the sample. This results in a vector of anomalies score for each time step: $a = \left[{a}_{1},{a}_{2},⋯{a}_{L}\right]$ where L is the length of the timeseries. The sample mean anomaly score *a̅* s retrieved by calculation of the arithmetic mean, i.e. $\overline{a} = \frac{{\sum }_{i = 1}^{L} {a}_{i}}{L}$

Once the mean anomaly score is calculated for every sample of the training data set, the thresholds may be set (step S134). For example, two thresholds may be set from A using the box-whisker approach for univariate outlier detection: ${thres}_{abnormal} = 3 rd Quartile$ ${thres}_{anomalous} = 3 rd Quartile + 1.5 IQR$ In other words, when fitting the multi-variate reconstruction error to the encompassing univariate Mahalanobis distance measure, the threshold settings that define the behaviour categories "normal," "abnormal" and "anomalous" are automated by using the upper end of the box-whisker approach for univariate outlier detection. The first threshold may be higher than the second threshold. The first threshold may determine the boundary for anomalous behaviour. Thus, an anomaly score above the first threshold is indicative of anomalous behaviour. The second threshold may determine the boundary between abnormal (i.e. behaviour which is not yet anomalous) and normal behaviour. Thus, an anomaly score below the second threshold is indicative of normal behaviour. Scores between the first and second thresholds are indicative of abnormal behaviour.

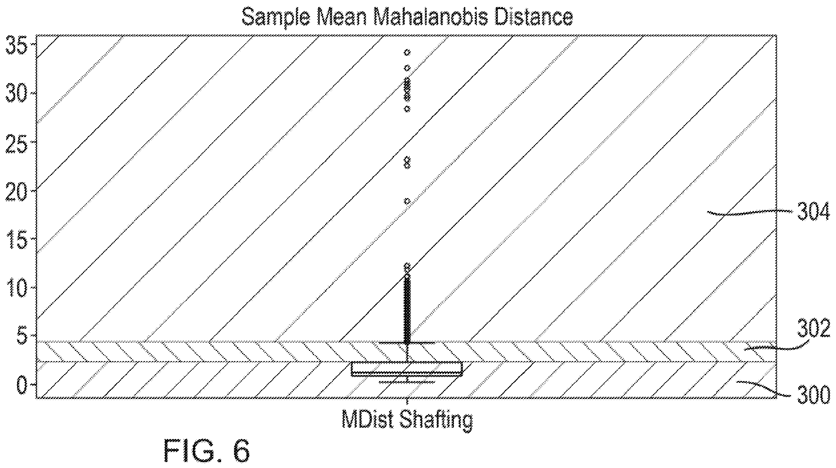

This approach is illustrated in Figure 6 which is a visual representation of the unsupervised threshold setting from the univariate Mahalanobis distance. The "normal," "abnormal" and "anomalous" running regions are labelled 300, 302 and 304 (also shaded in green, amber and red respectively). More detail on the approach is described for example in "Exploratory Data Analysis" by Tuckey, John W published by Addison-Wesley Publishing Company Reading, Mass. - Menlo Park, Cal., London, Amsterdam, Don Mills, Ontario, Sydney 1977, XVI, 688 S. It is appreciated that the use of two thresholds is indicative and there may be a single threshold to classify behaviour as normal or not normal. Similarly, there may be additional thresholds if further fine-grained classification is desirable.

In the example above, a sample is now classifiable as normal, abnormal or anomalous. Returning to Figure 3b, the next step is to incorporate the Mahalanobis distance parameters and threshold(s) into the neural network (step S136). All the estimated parameters including the thresholds and the linear regressions are used to build the output layer of the neural network that runs the necessary calculations in parallelisation to create the sample mean anomaly score, the sample mean anomaly score decomposition for each reconstructed feature and the classification before merging it with the feature reconstructions. In the fully combined model, it is noted that the computation is done on tensors and can therefore be used on graphical processing units (GPUs) as well as central processing units (CPUs). The fully trained model is thus able to classify behaviour as normal, abnormal or anomalous using the sample mean anomaly score and to determine which component is most likely to be responsible for the anomalous behaviour using sample mean anomaly score decomposition for each reconstructed feature.

The final illustrated step of Figure 3b is to run validation and verification tests on the fully integrated model (step S138). For example, the model is tested against the sparsely available failure runs.

Extending the Mahalanobis distance with its decomposition enables a novel root-cause analysis approach for identifying the main drivers for anomalous behaviour. This is normally only achieved with a larger set of failure examples and cannot otherwise be accomplished in sparse example environments such as those described in the background.

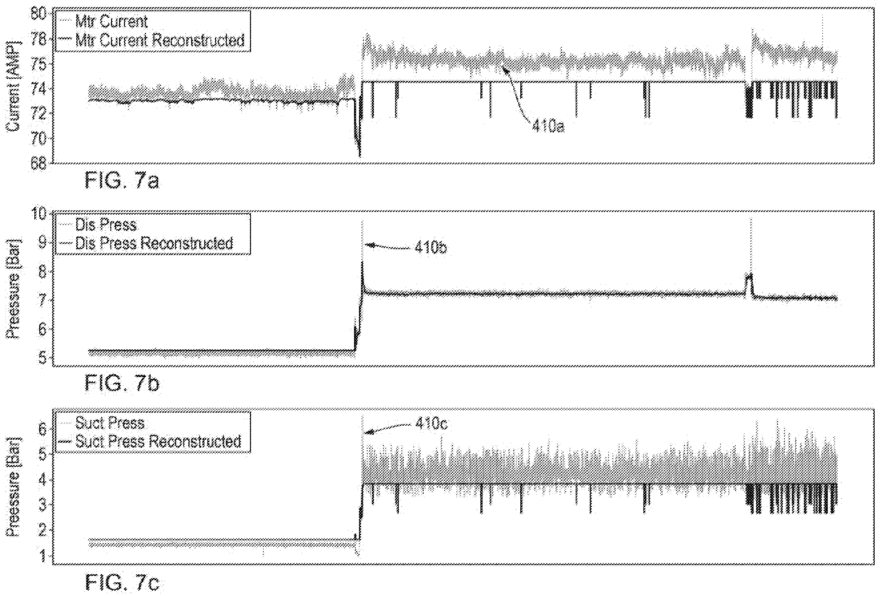

Merely as an example, the autoencoder is applied to data from an engineering asset in the form of a chilled water circulation pump on a marine vessel. The inputs include the current within the motor, the pressure of the fluid at the pump discharge and the pressure of the fluid at the pump suction. Figures 7a to 7e show the progression of the chilled water circulation pump from normal through abnormal to anomalous behaviour with a catastrophic failure occurring at the end of the sequence. Figures 7a to 7c plot the test data for each input (labelled 410a, 410b, 410c and in blue) against its algorithmic reconstruction using the final output model (in red).

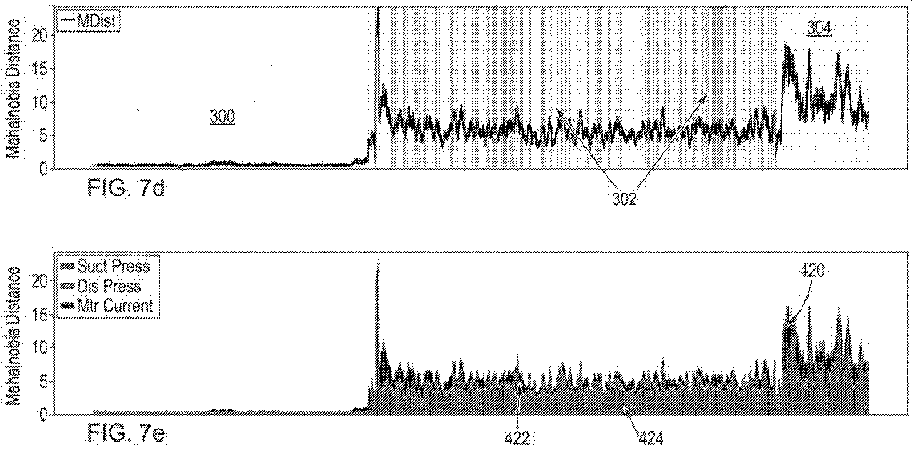

Figure 7d plots the univariate Mahalanobis distance based on the reconstruction error with the "normal", "abnormal" and "anomalous" running regions labelled 400, 402 and 404 (also shaded in green, amber and red respectively). Figure 7d thus indicates the health of the modelled system and shows that there is a considerable time period in which the system oscillates between "abnormal" and "anomalous" behaviour before finally consistently settling into "anomalous" behaviour. Figure 7e illustrates the contribution from each of the inputs depicted in Figures 7a to 7c to the Mahalanobis distance plotted in Figured 7d. The contributions from the motor, discharge pressure and suction press to the Mahalanobis distance (health measure) are labelled 420, 422 and 424, respectively.

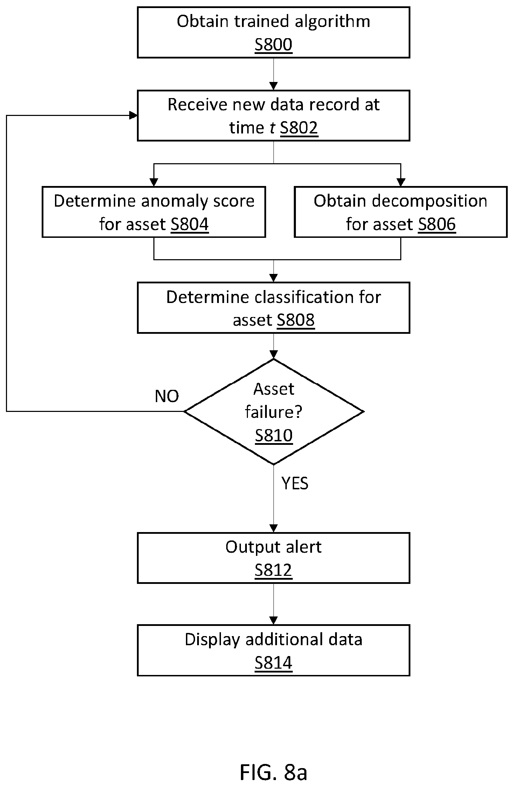

Figure 8a is a flowchart illustrating how the trained algorithm may be used to monitor an engineering asset. The trained (and enhanced) algorithm is obtained in step S800 (for example using the method detailed above). A new data record is also received at step S802. The new data record may be a large corpus of sensor data which corresponds to the data records used to train the trained algorithm.

The behaviour of the asset is determined using the algorithm and the new data. For example, the anomaly score (using either the generic Mahalanobis distance or the squared Mahalanobis distance) may be obtained (step S804) and the decomposition of the squared Mahalanobis distance may also be obtained (step S806). In other words, the sample mean anomaly score and the sample mean anomaly score decomposition for each reconstructed feature may be obtained using the data record. The classification as "normal," "abnormal" or "anomalous" is also determined depending on whether the sample mean anomaly score is above, between or below the relevant thresholds (step S808).

If the asset is likely to fail, e.g. the behaviour is determined to be anomalous at step S808, an alert (audio or visual) may be output to a user (step S812). The output may be presented as a decision aid in a graphical user interface on the display screen. If a system failure is not imminent, the system continues to collect and evaluate more data. It will be appreciated that more data may also be collected even if an alert is output.

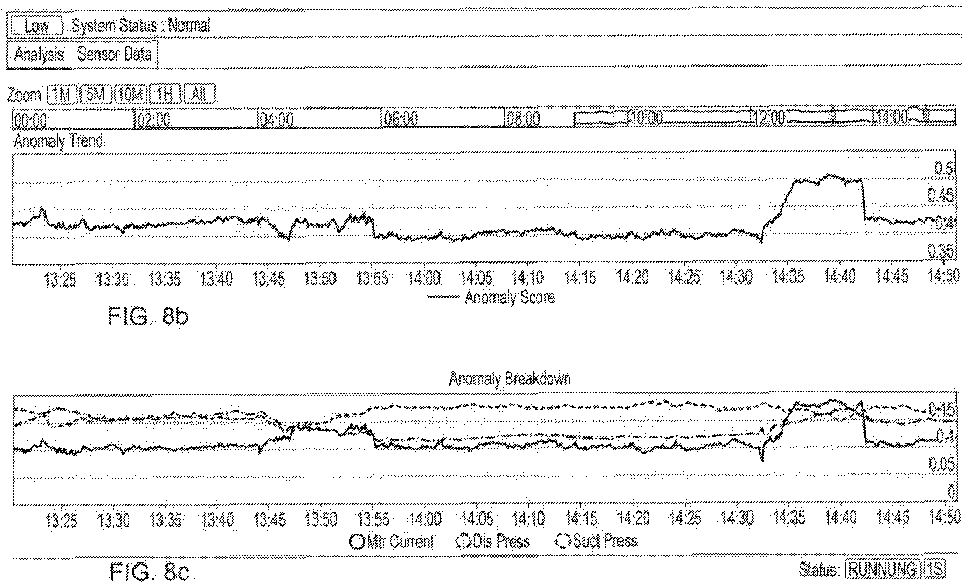

An optional step is for a user to drill down into additional information on the output (step S814), e.g. to investigate the decomposition of the Mahalanobis distance. Examples of additional information which may be output in a graphical user interface to a user are shown in Figures 8b and 8c. Figure 8b allows the user to see the trend in the Mahalanobis distance over time. Figure 8c shows the contributions from the motor, discharge pressure and suction press to the Mahalanobis distance (health measure) for the chilled water pump example. In both Figures 8b and 8c, the current behaviour is classified as "normal" and thus the visual output to the user is a green icon labelled "low". As shown, this example of the graphical user interface also has a tab labelled "sensor data" which allows the user to access all the inputs and outputs to and from the algorithm. Thus, the additional data may allow the user to identify the component within the engineering asset which is most likely to be the cause of the anomalous behaviour.

In addition or as an alternative to the user interface, the system may comprise an automated self-protection protocol module as shown in Figure 1. Such a module may be triggered by a classification of anomalous behaviour and may control the engineering asset. For example, when a component is indicated as being most likely to be contributing to the anomalous behaviour, the behaviour of the component may be controlled (e.g. suction pressure, motor speed or discharge pressure within a pump may be adjusted or controlled).

It will be appreciated that a chilled water circulation pump is just one example of an engineering asset which can be monitored. The enhanced autoencoder may be embedded into any suitable application, e.g. a prognostic and health monitoring (PHM) application employed on a marine vessel. Such a PHM application may use the autoencoder algorithm to simultaneously monitor multiple systems and specific subsystems such as those described in Figure 1.

Attention is directed to all papers and documents which are filed concurrently with or previous to this specification in connection with this application and which are open to public inspection with this specification, and the contents of all such papers and documents are incorporated herein by reference.

All of the features disclosed in this specification and/or all of the steps of any method or process so disclosed, may be combined in any combination, except combinations where at least some of such features and/or steps are mutually exclusive. Each feature disclosed in this specification may be replaced by alternative features serving the same, equivalent or similar purpose, unless expressly stated otherwise. Thus, unless expressly stated otherwise, each feature disclosed is one example only of a generic series of equivalent or similar features.

Although a few preferred embodiments have been shown and described, it will be appreciated by those skilled in the art that various changes and modifications might be made within the scope of the invention, as defined in the appended claims.

## Claims

1. A computer-implemented method for training an autoencoder (32, 100) to classify behaviour of an engineering asset as anomalous or not anomalous based on a comparison between an anomaly score and at least one anomaly threshold, wherein the autoencoder comprises an encoder (110) and a decoder (120), the method comprising:
obtaining training data (62) and test data comprising multiple data records for at least one engineering asset which corresponds to the engineering asset whose behaviour is to be classified, wherein the data records comprise a plurality of sensor readings for the engineering asset;
fitting the autoencoder (32, 100) to the obtained training data;
running the test data through the encoder (110) of the fitted autoencoder to obtain encodings of the test data;
generating a plurality of data sets from the obtained encodings, wherein the generated plurality of data sets include under-represented data sets which are data sets that represent less than 10% of the obtained encodings and which are extracted using a KDtree algorithm;
cloning the fitted autoencoder to create a cloned autoencoder for each of the generated plurality of data sets;
fitting each cloned autoencoder to its respective data set of the generated plurality of data sets;
aggregating the cloned autoencoders to form an over-arching autoencoder, wherein aggregating comprises using voting to aggregate predictions from each of the cloned autoencoders;
calculating an error data set between the training data and data reconstructed by the over-arching auto encoder, wherein the error data set comprises an absolute reconstruction error for each sample in the training data;
obtaining, using the calculated error data set, estimated parameters for calculating the anomaly score for each data record, wherein the anomaly score is selected from a Mahalanobis distance and a squared Mahalanobis distance and the estimated parameters comprise the mean, variance and covariance parameters of a normal distribution;
estimating, using the calculated error data set, parameters for calculating a decomposition of the anomaly score to identify contributions from each sensor reading to the calculated anomaly score, wherein the estimated parameters comprise a vector *u̅* of reconstruction error means, a vector *σ* of reconstruction error standard deviations, an inverse covariance matrix Σ⁻¹ of reconstruction errors across the feature space, a vector *bₘₘ* containing the square root of the diagonal of Σ⁻¹, a squared multiple correlation coefficient ${p}_{j}^{2}$ and a conditional expectation *E*(*yⱼ*|*y₋ⱼ*) where *yⱼ* is the j-th component variable of *yᵢ* which is an m dimensional vector of the absolute error between input and reconstructed features at time instance *tᵢ*, and
building at least one output layer of the autoencoder to calculate the anomaly score and the decomposition of the anomaly score and to classify the behaviour of the engineering asset as anomalous or not anomalous based on a comparison of the anomaly score with at least one anomaly threshold.

2. The method of claim 1, wherein the anomaly score *aᵢ* at time *tᵢ* is calculated using the formula: ${a}_{i} = \sqrt{{\left({y}_{i}-\overline{u}\right)}^{T} {Σ}^{- 1} \left({y}_{i}-\overline{u}\right)}$ where *yᵢ* is an m dimensional vector of the absolute error between the input and reconstructed features at time instance *tᵢ*, *u̅* is a vector of reconstruction error means and Σ⁻¹ is the inverse covariance matrix of reconstruction errors across the feature space.

3. The method of claim 1, wherein the anomaly score *aᵢ* at time *tᵢ* is calculated using the formula: ${a}_{i}^{2} = {\left({y}_{i}-\overline{u}\right)}^{T} {Σ}^{- 1} \left({y}_{i}-\overline{u}\right)$ where *yᵢ* is an m dimensional vector of the absolute error between the input and reconstructed features at time instance *tᵢ*, *u̅* is a vector of reconstruction error means and Σ⁻¹ is the inverse covariance matrix of reconstruction errors across the feature space.

4. The method of claim 2 or claim 3, wherein obtaining estimated parameters for the anomaly score comprises obtaining estimates of the vector *u̅* of reconstruction error means, and the inverse covariance matrix Σ⁻¹ of reconstruction errors using the mean, variance and covariance parameters of the normal distribution.

5. The method of any one of the preceding claims, wherein the decomposition of the anomaly score is obtained from: ${a}_{i}^{2} = {\sum }_{j = 1}^{m} {\left(1-{p}_{j}^{2}\right)}^{- 1 / 2} \left[{b}_{\left(j\right) mm}\left({y}_{j}-E\left(\left.{y}_{j}\right|{y}_{- j}\right)\right)\right] \left[\left({y}_{j}-{\overline{u}}_{j}\right)/{σ}_{j}\right]$ where *yⱼ* is the j-th component variable of *y* (a *m x 1* vector of the absolute error between the input and reconstructed features at a time instance), *y₋ⱼ* is the vector obtained from y by deleting its jth component variable, *u̅* is the vector of reconstruction error means, *σ* is the vector of reconstruction error standard deviations, Σ⁻¹ is the inverse covariance matrix of reconstruction errors across the feature space, *bₘₘ*is the vector containing the square root of the diagonal of Σ⁻¹ and with *u̅ⱼ* , *σⱼ* and *b*_{(*j*)*mm*} corresponding to the j-th component variable mean, standard deviation and element of the diagonal respectively, ${p}_{j}^{2}$ is the squared multiple correlation coefficient of *yⱼ* on the remaining variables *y₋ⱼ*, and *E*(*yⱼ*|*y₋ⱼ*) denotes the conditional expectation of *yⱼ* while all other variables *y₋ⱼ* are fixed.

6. The method of any one of the preceding claims, further comprising setting a first anomaly threshold, wherein an anomaly score above the first anomaly threshold is indicative of anomalous behaviour.

7. The method of claim 6, further comprising setting a second anomaly threshold, wherein an anomaly score above the second anomaly threshold and below the first anomaly threshold is indicative of abnormal behaviour and wherein an anomaly score below the second anomaly threshold is indicative of normal behaviour.

8. The method of any one of the preceding claims, wherein generating the plurality of data sets comprises applying a clustering analysis to the obtained encodings and applying a clustering analysis comprises
fitting multiple clustering algorithms over the obtained encodings;
selecting the best clustering algorithm by calculating a silhouette score and selecting the clustering algorithm with the highest silhouette score as the best clustering algorithm and
obtaining a plurality of clusters by fitting the selected clustering algorithm to the training data;
whereby the generated plurality of data sets comprise the plurality of clusters.

9. The method of any one of the preceding claims, comprising applying the KDtree algorithm to the obtained encodings to extract the under-represented data sets and wherein applying the KDtree algorithm comprises
fitting the KDtree algorithm on the obtained encodings;
selecting an under-represented data set generated by the fitting step; and
finding multiple data sets which are most similar to the selected data set; whereby the generated plurality of data sets comprise the selected data set and the multiple data sets.

10. A computer-implemented method for classifying behaviour of an engineering asset based on real-time data, the method comprising:
receiving a data record comprising real-time data on the engineering asset collected from a plurality of sensors (50, 52, 54, 56, 58) at time t;
classifying, using an autoencoder (32, 100) trained as specified in any one of claims 1 to 9, behaviour of the engineering asset based on the received data record by
calculating, using the trained autoencoder, an anomaly score from the received data record and
classifying behaviour as anomalous when the calculated anomaly score is above the at least one threshold; and
outputting an indication of the classified behaviour to a user.

11. The method of claim 10, wherein classifying, using the trained autoencoder, further comprises
obtaining, using the trained autoencoder, a decomposition of the calculated anomaly score from the received data record, wherein the decomposition shows contributions from each of the plurality of sensors to the calculated anomaly score.

12. The method of any one of the preceding claims, wherein the engineering asset is a system on a marine vessel.

13. A computer-readable medium comprising instructions which, when executed on a computer system cause the computer system to carry out the steps of the method of any one of claims 1 to 12.

14. A system (10) for classifying behaviour of an engineering asset based on real-time data, the system comprising:
a plurality of sensors (50, 52, 54, 56, 58);
a processor (30) which is configured to implement the method of any one of claims 10 to 12 and
a user interface (20) for outputting an indication of the classified behaviour to a user.

## Patentansprüche

1. Computerimplementiertes Verfahren zum Trainieren eines Autocodierer (32, 100), um das Verhalten einer technischen Ressource basierend auf einem Vergleich zwischen einem Anomaliepunktwert und mindestens einem Anomalieschwellenwert als anomal oder nicht anomal zu klassifizieren, wobei der Autodecodierer einen Codierer (110) und einen Decodierer (120) umfasst, wobei das Verfahren umfasst:
Erhalten von Trainingsdaten (62) und Testdaten, die mehrere Datensatzeinträge für mindestens eine technische Ressource umfassen, die der technischen Ressource entspricht, deren Verhalten klassifiziert werden soll, wobei die Datensatzeinträge eine Vielzahl von Sensormesswerten für die technische Ressource umfassen;
Anpassen des Autocodierers (32, 100) an die erhaltenen Trainingsdaten;
Ausführen der Testdaten über den Codierer (110) des angepassten Autocodierers, um Codierungen der Testdaten zu erhalten;
Erzeugen einer Vielzahl von Datensätzen aus den erhaltenen Codierungen, wobei die erzeugte Vielzahl von Datensätzen unterrepräsentierte Datensätze einschließt, bei denen es sich um Datensätze handelt, die weniger als 10 % der erhaltenen Codierungen repräsentieren, die unter Verwendung eines KDtree-Algorithmus extrahiert werden;
Klonen des angepassten Autocodierers, um für jeden der erzeugten Vielzahl von Datensätzen einen geklonten Autocodierer zu erstellen;
Anpassen jedes geklonten Autocodierers an seinen jeweiligen Datensatz aus der erzeugten Vielzahl von Datensätzen;
Aggregieren der geklonten Autocodierer, um einen übergreifenden Autocodierer zu bilden, wobei das Aggregieren das Verwenden von Abstimmungen zum Aggregieren von Vorhersagen aus jedem der geklonten Autocodierer umfasst;
Berechnen eines Fehlerdatensatzes zwischen den Trainingsdaten und den durch den übergreifenden Autocodierer rekonstruierten Daten, wobei der Fehlerdatensatz einen absoluten Rekonstruktionsfehler für jedes Sample in den Trainingsdaten umfasst;
Erhalten, unter Verwendung des berechneten Fehlerdatensatzes, von geschätzten Parametern zum Berechnen des Anomaliepunktwerts für jeden Datensatzeintrag, wobei der Anomaliepunktwert aus einer Mahalanobis-Distanz und einer quadrierten Mahalanobis-Distanz ausgewählt wird und die geschätzten Parameter die Mittelwert-, Varianz- und Kovarianzparameter einer Normalverteilung umfassen;
Schätzen, unter Verwendung des berechneten Fehlerdatensatzes, von Parametern zum Berechnen einer Zerlegung des Anomaliepunktwerts, um Beiträge aus jedem Sensormesswert zu dem berechneten Anomaliepunktwert zu erkennen, wobei die geschätzten Parameter einen Vektor *u̅* von Rekonstruktionsfehlermittelwerten, einen Vektor σ von Rekonstruktionsfehlerstandardabweichungen, eine inverse Kovarianzmatrix Σ⁻¹ von Rekonstruktionsfehlern über den Merkmalsraum hinweg, einen Vektor *bₘₘ*, der die Quadratwurzel der Diagonale von Σ⁻¹ enthält, einen quadrierten Mehrfachkorrelationskoeffizient ${p}_{j}^{2}$ und eine bedingte Erwartung *E*(*yⱼ*|*y₋ⱼ*) umfassen, wobei *yⱼ* die j-te Komponentenvariable von *yᵢ* ist, bei der es sich um einen m-dimensionalen Vektor des absoluten Fehlers zwischen Eingabemerkmalen und rekonstruierten Merkmalen zum Zeitpunkt *tᵢ*, handelt, und
Erstellen mindestens einer Ausgabeschicht des Autocodierers zum Berechnen des Anomaliepunktwerts und der Zerlegung des Anomaliepunktwerts und zum Klassifizieren des Verhaltens der technischen Ressource als anomal oder nicht anomal basierend auf einem Vergleich des Anomaliepunktwerts mit mindestens einem Anomalieschwellenwert.

2. Verfahren nach Anspruch 1, wobei der Anomaliepunktwert *aᵢ* zum Zeitpunkt *tᵢ* unter Verwendung der Formel berechnet wird: ${a}_{i} = \sqrt{{\left({y}_{i}-\overline{u}\right)}^{T} {Σ}^{- 1} \left({y}_{i}-\overline{u}\right)}$ wobei *yᵢ* ein m-dimensionaler Vektor des absoluten Fehlers zwischen den Eingabemerkmalen und den rekonstruierten Merkmalen zum Zeitpunkt *tᵢ* ist, *u̅* ein Vektor von Rekonstruktionsfehlermittelwerten ist und Σ⁻¹ die inverse Kovarianzmatrix von Rekonstruktionsfehlern über den Merkmalsraum hinweg ist.

3. Verfahren nach Anspruch 1, wobei der Anomaliepunktwert *aᵢ* zum Zeitpunkt *tᵢ* unter Verwendung der Formel berechnet wird: ${a}_{i}^{2} = {\left({y}_{i}-\overline{u}\right)}^{T} {Σ}^{- 1} \left({y}_{i}-\overline{u}\right)$ wobei *yᵢ* ein m-dimensionaler Vektor des absoluten Fehlers zwischen den Eingabemerkmalen und den rekonstruierten Merkmalen zum Zeitpunkt *tᵢ*, *u̅* ein Vektor von Rekonstruktionsfehlermittelwerten ist und Σ⁻¹ die inverse Kovarianzmatrix von Rekonstruktionsfehlern über den Merkmalsraum hinweg ist.

4. Verfahren nach Anspruch 2 oder Anspruch 3, wobei das Erhalten geschätzter Parameter für den Anomaliepunktwert das Erhalten von Schätzungen des Vektors *u̅* von Rekonstruktionsfehlermittelwerten und der inversen Kovarianzmatrix Σ⁻¹ von Rekonstruktionsfehlern unter Verwendung der Mittelwert-, Varianz- und Kovarianzparameter der Normalverteilung umfasst.

5. Verfahren nach einem der vorstehenden Ansprüche, wobei die Zerlegung des Anomaliepunktwerts erhalten wird aus: ${a}_{i}^{2} = {\sum }_{j = 1}^{m} {\left(1-{p}_{j}^{2}\right)}^{- 1 / 2} \left[{b}_{\left(j\right) mm}\left({y}_{j}-E\left(\left.{y}_{j}\right|{y}_{- j}\right)\right)\right] \left[\left({y}_{j}-{\overline{u}}_{j}\right)/{σ}_{j}\right]$ wobei *yⱼ* die j-te Komponentenvariable von *y* (ein *m x 1*-Vektor des absoluten Fehlers zwischen den Eingabemerkmalen und den rekonstruierten Merkmalen zu einem Zeitpunkt) ist, *y₋ⱼ* der Vektor ist, der aus y erhalten wird, indem seine *j*-te Komponentenvariable gelöscht wird, *u̅* der Vektor von Rekonstruktionsfehlermittelwerten ist, *σ* der Vektor von Rekonstruktionsfehlerstandardabweichungen ist, Σ⁻¹ die inverse Kovarianzmatrix von Rekonstruktionsfehlern über den Merkmalsraum hinweg ist, *bₘₘ* der Vektor ist, der die Quadratwurzel der Diagonalen von Σ⁻¹ enthält und wobei *u̅ⱼ, σⱼ* und *b*_{(*j*)*mm*} dem Mittelwert der j-ten Komponentenvariablen, der Standardabweichung bzw. dem Element der Diagonalen entsprechen, ${p}_{j}^{2}$ der quadrierte Mehrfachkorrelationskoeffizient von *yⱼ* an den verbleibenden Variablen *y₋ⱼ,* ist und *E(yⱼ*|*y₋ⱼ)* die bedingte Erwartung von *yⱼ* bezeichnet, während alle anderen Variablen *y₋ⱼ* feststehend sind.

6. Verfahren nach einem der vorstehenden Ansprüche, das ferner das Festlegen eines ersten Anomalieschwellenwerts umfasst, wobei ein Anomaliepunktwert oberhalb des ersten Anomalieschwellenwerts auf anomales Verhalten hinweist.

7. Verfahren nach Anspruch 6, das ferner das Festlegen eines zweiten Anomalieschwellenwerts umfasst, wobei ein Anomaliepunktwert oberhalb des zweiten Anomalieschwellenwerts und unterhalb des ersten Anomalieschwellenwerts auf anomales Verhalten hinweist und wobei ein Anomaliepunktwert unterhalb des zweiten Anomalieschwellenwerts auf normales Verhalten hinweist.

8. Verfahren nach einem der vorstehenden Ansprüche, wobei das Erzeugen der Vielzahl von Datensätzen das Anwenden einer Gruppierungsanalyse auf die erhaltenen Codierungen umfasst und das Anwenden einer Gruppierungsanalyse umfasst
Anpassen mehrerer Gruppierungsalgorithmen an die erhaltenen Codierungen;
Auswählen des besten Gruppierungsalgorithmus durch Berechnen eines Silhouettenpunktwerts und Auswählen des Gruppierungsalgorithmus mit dem höchsten Silhouettenpunktwert als den besten Gruppierungsalgorithmus und
Erhalten einer Vielzahl von Gruppen durch Anpassen des ausgewählten Gruppierungsalgorithmus an die Trainingsdaten;
wobei die erzeugte Vielzahl von Datensätzen die Vielzahl von Gruppen umfasst.

9. Verfahren nach einem der vorstehenden Ansprüche, das das Anwenden des KDtree-Algorithmus auf die erhaltenen Codierungen umfasst, um die unterrepräsentierten Datensätze zu extrahieren, und wobei das Anwenden des KDtree-Algorithmus umfasst
Anpassen des KDtree-Algorithmus an die erhaltenen Codierungen;
Auswählen eines unterrepräsentierten Datensatzes, der durch den Anpassungsschritt erzeugt wurde; und
Auffinden mehrerer Datensätze, die dem ausgewählten Datensatz am ähnlichsten sind; wobei die erzeugte Vielzahl von Datensätzen den ausgewählten Datensatz und die mehreren Datensätze umfasst.

10. Computerimplementiertes Verfahren zum Klassifizieren des Verhaltens einer technischen Ressource basierend auf Echtzeitdaten, wobei das Verfahren umfasst:
Empfangen eines Datensatzeintrags mit Echtzeitdaten über die technische Ressource, die von einer Vielzahl von Sensoren (50, 52, 54, 56, 58) zum Zeitpunkt *t* erfasst wurden;
Klassifizieren, unter Verwendung eines Autocodierers (32, 100), der nach einem der Ansprüche 1 bis 9 trainiert wurde, des Verhaltens der technischen Ressource basierend auf dem empfangenen Datensatzeintrag durch
Berechnen, unter Verwendung des trainierten Autocodierers, eines Anomaliepunktwerts aus dem empfangenen Datensatzeintrag und
Klassifizieren des Verhaltens als anomal, wenn der berechnete Anomaliepunktwert oberhalb mindestens eines Schwellenwerts liegt; und
Ausgeben einer Angabe des klassifizierten Verhaltens an einen Benutzer.

11. Verfahren nach Anspruch 10, wobei das Klassifizieren unter Verwendung des trainierten Autocodierers ferner umfasst
Erhalten, unter Verwendung des trainierten Autocodierers, einer Zerlegung des berechneten Anomaliepunktwerts aus dem empfangenen Datensatzeintrag, wobei die Zerlegung Beiträge von jedem der Vielzahl von Sensoren zu dem berechneten Anomaliepunktwert zeigt.

12. Verfahren nach einem der vorstehenden Ansprüche, wobei es sich bei der technischen Ressource um ein System auf einem Meeresfahrzeug handelt.

13. Computerlesbares Speichermedium, das Anweisungen umfasst, die, wenn sie auf einem Computersystem ausgeführt werden, das Computersystem veranlassen, die Schritte des Verfahrens nach einem der Ansprüche 1 bis 12 auszuführen.

14. System (10) zum Klassifizieren des Verhaltens einer technischen Ressource basierend auf Echtzeitdaten, wobei das System umfasst:
eine Vielzahl von Sensoren (50, 52, 54, 56, 58);
einen Prozessor (30), der konfiguriert ist, um das Verfahren nach einem der Ansprüche 10 bis 12 zu implementieren, und
eine Benutzerschnittstelle (20) zum Ausgeben eines Hinweises auf das klassifizierte Verhalten an einen Benutzer.

## Revendications

1. Procédé mis en œuvre par ordinateur afin d'entraîner un autoencodeur (32, 100) à classer le comportement d'un actif d'ingénierie comme anormal ou non anormal sur la base d'une comparaison entre un score d'anomalie et au moins un seuil d'anomalie, dans lequel l'autoencodeur comprend un encodeur (110) et un décodeur (120), le procédé comprenant :
l'obtention des données d'apprentissage (62) et des données d'essai comprenant de multiples enregistrements de données pour au moins un ouvrage d'art correspondant à l'ouvrage d'art dont le comportement doit être classé, dans lequel les enregistrements de données comprennent une pluralité de relevés de capteurs pour l'ouvrage d'art ;
l'adaptation de l'autoencodeur (32, 100) aux données d'apprentissage obtenues ;
l'exécution des données d'essai par le codeur (110) de l'autoencodeur ajusté pour obtenir des codages des données d'essai ;
la génération d'une pluralité d'ensembles de données à partir des codages obtenus, dans lequel la pluralité d'ensembles de données générée comportent des ensembles de données sous-représentés, c'est-à-dire des ensembles de données qui représentent moins de 10 % des codages obtenus et qui sont extraits à l'aide d'un algorithme KDtree ;
le clonage de l'autoencodeur ajusté afin de créer un autoencodeur cloné pour chacun des ensembles de données générés ;
l'adaptation de chaque autoencodeur cloné à son ensemble de données respectif parmi la pluralité d'ensembles de données générés ;
l'agrégation des autoencodeurs clonés pour former un autoencodeur global, dans lequel l'agrégation comprend l'utilisation du vote pour agréger les prédictions de chacun des autoencodeurs clonés ;
le calcul d'un ensemble de données d'erreur entre les données d'apprentissage et les données reconstruites par le codeur automatique global, dans lequel l'ensemble de données d'erreur comprennent une erreur de reconstruction absolue pour chaque échantillon des données d'apprentissage ;
l'obtention, à l'aide de l'ensemble de données d'erreur calculées, des paramètres estimés pour calculer le score d'anomalie pour chaque enregistrement de données, dans lequel le score d'anomalie est choisi parmi une distance de Mahalanobis et une distance de Mahalanobis au carré, et les paramètres estimés comprennent la moyenne, la variance et les paramètres de covariance d'une distribution normale ;
l'estimation, à l'aide de l'ensemble de données d'erreurs calculées, des paramètres de calcul d'une décomposition du score d'anomalie afin d'identifier les contributions de chaque lecture de capteur au score d'anomalie calculé, dans lequel les paramètres estimés comprennent un vecteur *u̅* de moyen d'erreur de reconstruction, un vecteur σ d'écarts-types d'erreurs de reconstruction, une matrice de covariance inverse Σ⁻¹ des erreurs de reconstruction dans l'espace des caractéristiques, un vecteur *bₘₘ* contenant la racine carrée de la diagonale de Σ⁻¹, un coefficient de corrélation multiple au carré ${p}_{j}^{2}$ et une espérance conditionnelle *E*(*yⱼ*|*y₋ⱼ*) *où yⱼ* est la j^{ième} variable composante de *yᵢ* qui est un vecteur m dimensionnel de l'erreur absolue entre les caractéristiques d'entrée et les caractéristiques reconstruites à l'instance temporelle *tᵢ*, et
la construction d'au moins une couche de sortie de l'autoencodeur pour calculer le score d'anomalie et la décomposition du score d'anomalie et pour classer le comportement du bien d'ingénierie comme anormal ou non anormal sur la base d'une comparaison du score d'anomalie avec au moins un seuil d'anomalie.

2. Procédé selon la revendication 1, dans lequel le score d'anomalie *aᵢ* au moment *tᵢ* est calculé à l'aide de la formule : ${a}_{i} = \sqrt{{\left({y}_{i}-\overline{u}\right)}^{T} {Σ}^{- 1} \left({y}_{i}-\overline{u}\right)}$ où *yᵢ* est un vecteur m dimensionnel de l'erreur absolue entre les caractéristiques d'entrée et les caractéristiques reconstruites à l'instant *tᵢ*, *u̅* est un vecteur de moyen d'erreur de reconstruction et Σ⁻¹ est la matrice de covariance inverse des erreurs de reconstruction dans l'espace des caractéristiques.

3. Procédé selon la revendication 1, dans lequel le score d'anomalie *aᵢ* au moment *tᵢ* est calculé à l'aide de la formule : ${a}_{i}^{2} = {\left({y}_{i}-\overline{u}\right)}^{T} {Σ}^{- 1} \left({y}_{i}-\overline{u}\right)$ où *yᵢ* est un vecteur m dimensionnel de l'erreur absolue entre les caractéristiques d'entrée et les caractéristiques reconstruites à l'instant *tᵢ*, *u̅* est un vecteur de moyen d'erreur de reconstruction et Σ⁻¹ est la matrice de covariance inverse des erreurs de reconstruction dans l'espace des caractéristiques.

4. Procédé selon la revendication 2 ou la revendication 3, dans lequel l'obtention de paramètres estimés pour le score d'anomalie comprend l'obtention d'estimations du vecteur *u̅* de moyen d'erreur de reconstruction et de la matrice de covariance inverse Σ⁻¹ des erreurs de reconstruction à l'aide des paramètres de moyen, de variance et de covariance de la distribution normale.

5. Procédé selon l'une quelconque des revendications précédentes, dans lequel la décomposition du score d'anomalie est obtenue à partir de : ${a}_{i}^{2} = {\sum }_{j = 1}^{m} {\left(1-{p}_{j}^{2}\right)}^{- 1 / 2} \left[{b}_{\left(j\right) mm}\left({y}_{j}-E\left(\left.{y}_{j}\right|{y}_{- j}\right)\right)\right] \left[\left({y}_{j}-{\overline{u}}_{j}\right)/{σ}_{j}\right]$ où *yⱼ* est la j^{ième} variable composante de *y* (un vecteur *mx1* de l'erreur absolue entre les caractéristiques d'entrée et les caractéristiques reconstruites à un moment donné), *y₋ⱼ* est le vecteur obtenu à partir de y en supprimant sa*j*^{ième} variable composante, *u̅* est le vecteur de moyen d'erreur de reconstruction, *σ* est le vecteur des écarts types d'erreur de reconstruction, Σ⁻¹ est la matrice de covariance inverse des erreurs de reconstruction dans l'espace des caractéristiques, *bₘₘ* est le vecteur contenant la racine carrée de la diagonale de Σ⁻¹ et avec *u̅ⱼ , σⱼ* et *b*_{(*j*)*mm*} correspondant respectivement à la moyenne de la j^{ième} variable composante, à l'écart type et à l'élément de la diagonale, ${p}_{j}^{2}$ est le coefficient de corrélation multiple au carré de *yⱼ* sur les variables restantes *y₋ⱼ,* et *E(yⱼ*|*y₋ⱼ)* représente l'espérance conditionnelle de *yⱼ* alors que toutes les autres variables *y₋ⱼ* sont fixes.

6. Procédé selon l'une quelconque des revendications précédentes, comprenant en outre à définir un premier seuil d'anomalie, dans lequel un score d'anomalie supérieur au premier seuil d'anomalie est révélateur d'un comportement anormal.

7. Procédé selon la revendication 6, comprenant en outre à définir un second seuil d'anomalie, dans lequel un score d'anomalie supérieur au second seuil d'anomalie et inférieur au premier seuil d'anomalie indiquant un comportement anormal, et un score d'anomalie inférieur au second seuil d'anomalie indiquant un comportement normal.

8. Procédé selon l'une quelconque des revendications précédentes, dans lequel la génération de la pluralité d'ensembles de données comprend l'application d'une analyse de regroupement aux encodages obtenus et l'application d'une analyse de regroupement comprend
l'adaptation de plusieurs algorithmes de regroupement sur les encodages obtenus ;
la sélection du meilleur algorithme de regroupement en calculant un score de silhouette et en sélectionnant l'algorithme de regroupement ayant le score de silhouette le plus élevé comme étant le meilleur algorithme de regroupement, et
l'obtention d'une pluralité de grappes en adaptant l'algorithme de regroupement sélectionné aux données d'apprentissage ;
selon lequel la pluralité d'ensembles de données générés comprennent la pluralité de grappes.

9. Procédé selon l'une quelconque des revendications précédentes, comprenant l'application de l'algorithme KDtree aux encodages obtenus pour extraire les ensembles de données sous-représentés et dans lequel l'application de l'algorithme KDtree comprend
l'ajustement de l'algorithme KDtree aux encodages obtenus ;
la sélection d'un ensemble de données sous-représenté généré par l'étape d'ajustement ; et
le fait de trouver de multiples ensembles de données qui sont les plus similaires à l'ensemble de données sélectionné ; selon lequel la pluralité d'ensembles de données générés comprend l'ensemble de données sélectionné et les ensembles de données multiples.

10. Procédé mis en œuvre par ordinateur afin de pour classer le comportement d'un actif d'ingénierie sur la base de données en temps réel, le procédé comprenant :
la réception d'un enregistrement de données comprenant des données en temps réel sur l'actif d'ingénierie recueillies par une pluralité de capteurs (50, 52, 54, 56, 58) à l'instant *t ;*
le classement, à l'aide d'un autoencodeur (32, 100) entraîné comme spécifié selon l'une quelconque des revendications 1 à 9, du comportement de l'actif d'ingénierie sur la base de l'enregistrement de données reçu en
calculant, à l'aide de l'autoencodeur entraîné, un score d'anomalie à partir de l'enregistrement de données reçu, et
classant le comportement comme anormal lorsque le score d'anomalie calculé est supérieur à l'un des seuils au moins ; et
émettant une indication du comportement classé à l'intention d'un utilisateur.

11. Procédé selon la revendication 10, dans lequel le classement, à l'aide de l'autoencodeur entraîné, comprend en outre
l'obtention, à l'aide de l'autoencodeur entraîné, d'une décomposition du score d'anomalie calculé à partir de l'enregistrement de données reçu, dans lequel la décomposition montre les contributions de chacun de la pluralité de capteurs au score d'anomalie calculé.

12. Procédé selon l'une quelconque des revendications précédentes, dans lequel le bien d'ingénierie est un système sur un navire.

13. Support de stockage lisible par ordinateur comprenant des instructions qui, lorsqu'elles sont exécutées par un ordinateur, amènent l'ordinateur à réaliser les étapes du procédé selon l'une quelconque des revendications 1 à 12.

14. Système (10) de classement du comportement d'un actif d'ingénierie basé sur des données en temps réel, le système comprenant :
une pluralité de capteurs (50, 52, 54, 56, 58) ;
un processeur (30) qui est configuré pour mettre en œuvre le procédé selon l'une quelconque des revendications 10 à 12 et
une interface utilisateur (20) pour émettre à un utilisateur une indication sur le comportement classé.
